(19) **Europäisches Patentamt / European Patent Office / Office européen des brevets**

(11) **EP 1 943 556 B1**

(12) **EUROPEAN PATENT SPECIFICATION**

(45) Date of publication and mention
of the grant of the patent:
**11.02.2009 Bulletin 2009/07**

(51) Int Cl.:
*G02B 27/01* (2006.01)   *G02B 5/18* (2006.01)

(21) Application number: **06809817.7**

(22) Date of filing: **31.10.2006**

(86) International application number:
**PCT/IL2006/001257**

(87) International publication number:
**WO 2007/052265 (10.05.2007 Gazette 2007/19)**

(54) **BINOCULAR OPTICAL RELAY DEVICE**

BINOKULARE OPTISCHE RELAISEINRICHTUNG

DISPOSITIF DE RELAIS OPTIQUE BINOCULAIRE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **03.11.2005 US 732661 P**

(43) Date of publication of application:
**16.07.2008 Bulletin 2008/29**

(73) Proprietor: **MIRAGE INNOVATIONS LTD.**
**49001 Petach-Tikva (IL)**

(72) Inventors:
• **NIV, Yehuda**
**74051 Nes Ziona (IL)**

• **BEKER, Amir**
**48054 Rosh Haayin (IL)**

(74) Representative: **Dorschner, David et al**
**Dennemeyer & Associates S.A.**
**55, rue des Bruyères**
**1274 Howald (LU)**

(56) References cited:
WO-A2-20/04109349          FR-A1- 2 840 692
US-A- 5 682 255            US-A1- 2002 122 015
US-A1- 2003 030 596        US-B1- 6 822 770

• **W. SCHULZ, J. EBER: "Brillenanpassung" 1997,
OPTISCHE FACHVERÖFFENTLICHUNG GMBH ,
HEIDELBERG , XP002431564 page 16**

**Description**

FIELD AND BACKGROUND OF THE INVENTION

The present invention relates to optics, and, more particularly, to a binocular optical relay device and system capable of providing monochrome or multicolor images.

Miniaturization of electronic devices has always been a continuing objective in the field of electronics. Electronic devices are often equipped with some form of a display, which is visible to a user. As these devices reduce in size, there is an increase need for manufacturing compact displays, which are compatible with small size electronic devices. Besides having small dimensions, such displays should not sacrifice image quality, and be available at low cost. By definition the above characteristics are conflicting and many attempts have been made to provide some balanced solution.

An electronic display may provide a real image, the size of which is determined by the physical size of the display device, or a virtual image, the size of which may extend the dimensions of the display device.

A real image is defined as an image, projected on or displayed by a viewing surface positioned at the location of the image, and observed by an unaided human eye (to the extent that the viewer does not require corrective glasses). Examples of real image displays include a cathode ray tube (CRT), a liquid crystal display (LCD), an organic light emitting diode array (OLED), or any screen-projected displays. A real image could be viewed normally from a distance of about at least 25 cm, the minimal distance at which the human eye can utilize focus onto an object. Unless a person is long-sighted, he may not be able to view a sharp image at a closer distance.

Typically, desktop computer systems and workplace computing equipment utilize CRT display screens to display images for a user. The CRT displays are heavy, bulky and not easily miniaturized. For a laptop, a notebook, or a palm computer, flat-panel display is typically used. The flat-panel display may use LCD technology implemented as passive matrix or active matrix panel. The passive matrix LCD panel consists of a grid of horizontal and vertical wires. Each intersection of the grid constitutes a single pixel, and controls an LCD element. The LCD element either allows light through or blocks the light. The active matrix panel uses a transistor to control each pixel, and is more expensive.

An OLED flat panel display is an array of light emitting diodes, made of organic polymeric materials. Existing OLED flat panel displays are based on both passive and active configurations. Unlike the LCD display, which controls light transmission or reflection, an OLED display emits light, the intensity of which is controlled by the electrical bias applied thereto. Flat-panels are also used for miniature image display systems because of their compactness and energy efficiency compared to the CRT displays. Small size real image displays have a relatively small surface area on which to present a real image, thus have limited capability for providing sufficient information to the user. In other words, because of the limited resolution of the human eye, the amount of details resolved from a small size real image might be insufficient.

By contrast to a real image, a virtual image is defined as an image, which is not projected onto or emitted from a viewing surface, and no light ray connects the image and an observer. A virtual image can only be seen through an optic element, for example a typical virtual image can be obtained from an object placed in front of a converging lens, between the lens and its focal point. Light rays, which are reflected from an individual point on the object, diverge when passing through the lens, thus no two rays share two endpoints. An observer, viewing from the other side of the lens would perceive an image, which is located behind the object, hence enlarged. A virtual image of an object, positioned at the focal plane of a lens, is said to be projected to infinity. A virtual image display system, which includes a miniature display panel and a lens, can enable viewing of a small size, but high content display, from a distance much smaller than 25 cm. Such a display system can provide a viewing capability which is equivalent to a high content, large size real image display system, viewed from much larger distance.

Conventional virtual image displays are known to have many shortcomings. For example, such displays have suffered from being too heavy for comfortable use, as well as too large so as to be obtrusive, distracting and even disorienting. These defects stem from, *inter alia,* the incorporation of relatively large optics systems within the mounting structures, as well as physical designs which fail to adequately take into account important factors as size, shape, weight, *etc*.

Recently, holographic optical elements have been used in portable virtual image displays. Holographic optical elements serve as an imaging lens and a combiner where a two-dimensional, quasi-monochromatic display is imaged to infinity and reflected into the eye of an observer. A common problem to all types of holographic optical elements is their relatively high chromatic dispersion. This is a major drawback in applications where the light source is not purely monochromatic. Another drawback of some of these displays is the lack of coherence between the geometry of the image and the geometry of the holographic optical element, which causes aberrations in the image array that decrease the image quality.

New designs, which typically deal with a single holographic optical element, compensate for the geometric and chromatic aberrations by using non-spherical waves rather than simple spherical waves for recording; however, they do not overcome the chromatic dispersion problem. Moreover, with these designs, the overall optical systems are usually very complicated and difficult to manufacture. Furthermore, the field-of-view resulting from these designs is usually very small.

U.S. Patent No. 4,711,512 to Upatnieks describes a diffractive planar optics head-up display configured to transmit collimated light wavefronts of an image, as well as to allow light rays coming through the aircraft windscreen to pass and be viewed by the pilot. The light wavefronts enter an elongated optical element located within the aircraft cockpit through a first diffractive element, are diffracted into total internal reflection within the optical element, and are diffracted out of the optical element by means of a second diffractive element into the direction of the pilot's eye while retaining the collimation. Upatnieks, however, does not teach how the display could transmit a wide field-of-view, or tackle a broad spectrum of wavelengths (for providing color images).

U.S. Patent No. 5,966,223 to Friesem et al describes a holographic optical device similar to that of Upatnieks, with the additional aspect that the first diffractive optical element acts further as the collimating element that collimates the waves emitted by each data point in a display source and corrects for field aberrations over the entire field-of-view. The field-of-view discussed is $\pm 6°$, and there is a further discussion of low chromatic sensitivity over wavelength shift of $\Delta\lambda_c$ of $\pm 2$ nm around a center wavelength $\lambda_c$ of 632.8 nm. However, the diffractive collimating element of Friesem *et al.* is known to narrow spectral response, and the low chromatic sensitivity at spectral range of $\pm 2$ nm becomes an unacceptable sensitivity at $\pm 20$ nm or $\pm 70$ nm.

U.S. Patent No. 6,757,105 to Niv et al provides a diffractive optical element for optimizing a field-of-view for a multicolor spectrum. The optical element includes a light-transmissive substrate and a linear grating formed therein. Niv *et al.* teach how to select the pitch of the linear grating and the refraction index of the light-transmissive substrate so as to trap a light beam having a predetermined spectrum and characterized by a predetermined field of view to propagate within the light-transmissive substrate via total internal reflection. Niv *et al.* also disclose an optical device incorporating the aforementioned diffractive optical element for transmitting light in general and images in particular into the eye of the user.

The above prior art virtual image devices, however, provide a single optical channel, hence allowing the scene of interest to be viewed by one eye. It is recognized that the ability of any virtual image devices to transmit an image without distortions inherently depends on whether or not light rays emanating from all points of the image are successfully transmitted to the eye of the user in their original wavelength. Due to the single optical channel employed by presently known devices, the field-of-view which can be achieved without distortions or loss of information is rather limited.

The above virtual image devices, however, provide a single optical channel, hence allowing the scene of interest to be viewed by one eye. It is recognized that the ability of any virtual image devices to transmit an image without distortions inherently depends on whether or not light rays emanating from all points of the image are successfully transmitted to the eye of the user in their original color. Due to the single optical channel employed by presently known devices, the filed-of-view which can be achieved without distortions or loss of information is rather limited. Furthermore, a single optical channel cannot provide a stereoscopic image.

A binocular device which employs several diffractive optical elements is disclosed in U.S. Patent Application Nos. 10/896,865 and 11/017,920, and in International Patent Application, Publication No. WO 2006/008734 An optical relay is formed of a light transmissive substrate, an input diffractive optical element and two output diffractive optical elements. Collimated light is diffracted into the optical relay by the input diffractive optical element, propagates in the substrate via total internal reflection and coupled out of the optical relay by two output diffractive optical elements. The input and output diffractive optical elements preserve relative angles of the light rays to allow transmission of images with minimal or no distortions. The output elements are spaced apart such that light diffracted by one element is directed to one eye of the viewer and light diffracted by the other element is directed to the other eye of the viewer. The binocular design of these references significantly improves the field-of view. The images provided by the above systems are viewed by the user as planar images.

U.S. Patent No. 6,882,479 to Song et al. discloses a wearable display system for producing a "three-dimensional" image. The display includes a display panel which outputs an optical signal and a waveguide which guides the propagation of the signal. The signal is diffracted out of the waveguide by two gratings, and magnified by magnifying lenses. Two shutters are used for alternately blocking the outgoing light. The wearable display system operates on the principle that a three-dimensional effect is realized when the same image reaches the eyes of the user with a time difference.

Although some of the above techniques provide wide field-of-view images, their practical implementation require the use of two image sources, one for each eye, and/or positioning the viewing device at a considerable distance from the eyes of the user to maintain free optical path between the image source(s) and the optical relay.

Display systems using a single image source are known from WO 2004/109349 or FR 2 840 692.

The present invention provides solutions to the problems associated with prior art binocular devices.

SUMMARY OF THE INVENTION

According to one aspect of the present invention there, is provided an optical relay device, with the features defined by claim 1.

According to another aspect of the present invention there is provided a system for generating and transmitting an image. The system comprises the optical relay device and an image generating system for providing the optical relay device with collimated light constituting the image.

According to further features in preferred embodiments of the invention described below, each of the optical elements comprises a linear grating. According to still further, features in the described preferred embodiments the input optical elements comprise a blazed linear grating.

According to still further features in the described preferred embodiments the device further comprises an additional optical element positioned at the apex section and configured for reducing optical cross-talks between the input optical elements.

According to yet another aspect of the present invention there is provided a method of manufacturing the optical relay device of claim 1. The method comprises the steps defined in claims 5 or 7.

According to further features in preferred embodiments of the invention described below, the mold is also configured to form an additional optical element at the apex section. The additional optical element serves for reducing optical cross-talks between the central linear gratings.

According to further features in preferred embodiments of the invention described below, the method further comprises attaching an additional optical element to the light transmissive substrate at the apex section. The additional optical element serves for reducing optical cross-talks between the central linear gratings.

According to still further features in the described preferred embodiments two central linear gratings are designed and constructed as input optical elements capable of redirecting light rays striking the light transmissive substrate into the light transmissive substrate such that at least one light ray of the light rays propagates within the light-transmissive substrate via total internal reflection. According to still further features in the described preferred embodiments the central linear gratings comprise blazed linear gratings.

According to still further features in the described preferred embodiments each of the right and the left linear gratings are designed and constructed as output optical elements capable of redirecting light rays propagating within the light transmissive substrate out of the light transmissive substrate.

According to still further features in the described preferred embodiments the additional optical element comprises a light absorber.

According to still further features in the described preferred embodiments the additional optical element comprises a light scatterer.

According to still further features in the described preferred embodiments the additional optical element comprises a light diffuser.

According to still further features in the described preferred embodiments the structure is generally a chevron or a crescent.

According to still further features in the described preferred embodiments the input linear gratings comprise a right input linear grating and a left input linear grating, wherein the right and left input linear gratings are characterized by periodic linear structures having similar periods and different orientations.

According to still further features in the described preferred embodiments the left input linear grating and the left output linear grating are characterized by periodic linear structures having similar periods and similar orientations. According to still further features in the described preferred embodiments the right input linear grating and the right output linear grating are characterized by periodic linear structures having similar periods and similar orientations.

According to still further features in the described preferred embodiments the left output optical element is designed and constructed for redirecting light striking the light transmissive substrate at any angle within a predetermined field-of-view out of the light-transmissive substrate. According to still further features in the described preferred embodiments the right output optical element is designed and constructed for redirecting light striking the light transmissive substrate at any angle within the predetermined field-of-view out of the light-transmissive substrate.

According to still further features in the described preferred embodiments each of the left and the right output optical element is characterized by planar dimensions selected such that at least a portion of at least one outermost light ray within the predetermined field-of-view is redirected by the left output optical element into a first two-dimensional region, and at least a portion of at least one outermost light within the predetermined field-of-view is redirected by the right output optical element into a second two-dimensional region.

According to still further features in the described preferred embodiments the left output optical element is designed and constructed for redirecting light striking the light transmissive substrate at any angle within a first partial field-of-view out of the light-transmissive substrate. According to still further features in the described preferred embodiments the right output optical element is designed and constructed for redirecting light striking the light transmissive substrate at any angle within a second partial field-of-view out of the light-transmissive substrate.

According to still further features in the described preferred embodiments the first partial field-of-view and the second partial field-of-view are different. According to still further features in the described preferred embodiments the first partial field-of view and the second partial field-of-view are partially overlapped.

According to still further features in the described preferred embodiments the left output optical element is characterized by planar dimensions selected such that at least a portion of at least one outermost light ray within the first partial field-of-view is directed to a first two-dimensional region. According to still further features in the described preferred embodiments the right output optical element is characterized by planar dimensions selected such that at least a portion of at least one outermost light ray within the second partial field-of-view is directed to a second two-dimensional region.

According to still further features in the described preferred embodiments both the first and the second two-dimensional regions are at a predetermined distance from the light transmissive substrate.

According to still further features in the described preferred embodiments a lateral separation $\Delta y$ between the center of the first two-dimensional region and the center of the second two-dimensional region is at least 40 millimeters. According to still further features in the described preferred embodiments the lateral separation $\Delta y$ is less than 80 millimeters.

According to still further features in the described preferred embodiments the planar dimensions are selected such that the portions of the outermost light rays are respectively directed to the first and the second two-dimensional regions, for any lateral separation $\Delta y$ which is larger than 40 millimeters and smaller than 80 millimeters, alternatively $\Delta y$ is larger than 50 millimeters and smaller than 65 millimeters, alternatively $\Delta y$ is larger than 53 millimeters and smaller than 73 millimeters, alternatively $\Delta y$ is larger than 53 millimeters and smaller than 63 millimeters, alternatively $\Delta y$ is larger than 58 millimeters and smaller than 68 millimeters, alternatively $\Delta y$ is larger than 63 millimeters and smaller than 73 millimeters.

According to still further features in the described preferred embodiments a width characterizing the planar dimensions of the right and the left output optical elements is smaller than a width characterizing the planar dimensions of the input optical element.

According to still further features in the described preferred embodiments the predetermined distance is from about 15 millimeters to about 35 millimeters.

According to still further features in the described preferred embodiments a width of each of the first two-dimensional region and the second two-dimensional region is from about 4 millimeters to about 9 millimeters.

According to still further features in the described preferred embodiments a length of each of the first two-dimensional region and the second two-dimensional region is from about 5 millimeters to about 13 millimeters.

According to still further features in the described preferred embodiments a length of each of the input optical elements equals from about X to about 3X where X is a minimal unit hop-length characterizing propagation of an outermost light ray within the light transmissive substrate via total internal reflection.

According to still further features in the described preferred embodiments the light is characterized by a spectrum inclusively defined between a shortest wavelength and a longest wavelength.

According to still further features in the described preferred embodiments a length of the input optical element equals from about X to about 3X where X is a unit hop-length characterizing propagation of a light ray having the shortest wavelength within the light transmissive substrate via total internal reflection.

The present invention successfully addresses the shortcomings of the presently known configurations by providing an optical relay device, an optical system and a method for manufacturing the optical relay device. The device, system and method of the present embodiments enjoy properties far exceeding the presently known devices, systems and methods.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. In case of conflict, the patent specification, including definitions, will control. In addition, the materials, methods, and examples are illustrative only and not intended to be limiting.

BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:

FIG. 1 is a schematic illustration of light diffraction by a linear diffraction grating operating in transmission mode;

FIGs. 2A-D are schematic illustrations of a front view in the x-y plane (Figure 2A), and cross sectional views in the y-z plane (Figures 2B-C) and x-z plane (Figure 2D) of an optical relay device, according to various exemplary embodiments of the present invention;

FIGs. 3A-B are schematic illustrations of a front view (Figure 3A) and a side view (Figure 3B) of a preferred positioning of the optical relay device in front of a face of a user, according to various exemplary embodiments of the present invention;

FIGs. 4A-B are fragmentary view illustrating one segment of the optical relay device in a plane parallel to the longitudinal and normal axes (Figure 4A), and a plane parallel to the transverse and normal axes (Figure 4B), according to various exemplary embodiments of the present invention;

FIG. 4C is a schematic illustration of a rectangular field-of-view of the optical relay device, according to various exemplary embodiments of the invention;

FIGs. 4D-E are schematic illustrations of field-of-view angles of the optical relay device, according to various exemplary embodiments of the invention;

FIG. 5 is a schematic illustration of the optical relay device of the present embodiments, in which the cross sectional views along lines B---B' and A---A' of Figure 2A are superimposed;

FIGs. 6A-F are schematic illustrations of wavefront propagation within the optical relay device, according to preferred embodiments of the invention in which different partial field-of-views propagate within in different segments of the light transmissive substrate;

FIG. 7 is a schematic illustration of binocular system, according to various exemplary embodiments of the present invention;

FIGs. 8A-D are flowchart diagrams of method steps suitable for manufacturing the optical relay device, according to various exemplary embodiments of the present invention;

FIGs. 9A-L are schematic process illustrations describing various manufacturing steps of the optical relay device, according to various exemplary embodiments of the present invention; and

FIG. 10 is a schematic illustration of a top view of a cavity of a mold which can be used for manufacturing the optical relay device, according to various exemplary embodiments of the present invention.

## DESCRIPTION OF THE PREFERRED EMBODIMENTS

The present embodiments comprise binocular optical relay device and system which can be used for transmitting light. Specifically, but not exclusively, the present embodiments can be used for providing virtual images. The present embodiments can be used in many applications in which virtual images are viewed, including, without limitation, eyeglasses, binoculars, head mounted displays, head-up displays, cellular telephones, personal digital assistants, aircraft cockpits and the like. The present embodiments further comprise a method suitable for manufacturing the optical relay device.

The principles and operation of a device and system according to the present invention may be better understood with reference to the drawings and accompanying descriptions.

Before explaining at least one embodiment of the invention in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

When a ray of light moving within a light-transmissive substrate and striking one of its internal surfaces at an angle $\phi 1$ as measured from a normal to the surface, it can be either reflected from the surface or refracted out of the surface into the open air in contact with the substrate. The condition according to which the light is reflected or refracted is determined by Snell's law, which is mathematically realized through the following equation:

$$n_A \sin \phi_2 = n_S \sin \phi_1, \qquad (EQ. 1)$$

where $n_s$ is the index of refraction of the light-transmissive substrate, $n_A$ is the index of refraction of the medium outside the light transmissive substrate ($n_s > n_A$), and $\phi 2$ is the angle in which the ray is refracted out, in case of refraction. Similarly to $\phi 1$, $\phi 2$ is measured from a normal to the surface. A typical medium outside the light transmissive substrate is air having an index of refraction of about unity.

As used herein, the term "about" refers to $\pm 10\ \%$.

As a general rule, the index of refraction of any substrate depends on the specific wavelength $\lambda$ of the light

which strikes its surface. Given the impact angle, $\phi_1$, and the refraction indices, $n_s$ and $n_A$, Equation 1 has a solution for $\phi_2$ only for $\phi_1$ which is smaller than arcsine of $n_A/n_s$ often called the critical angle and denoted $\alpha_c$. Hence, for sufficiently large $\phi_1$ (above the critical angle), no refraction angle $\phi_2$ satisfies Equation 1 and light energy is trapped within the light-transmissive substrate. In other words, the light is reflected from the internal surface as if it had stroked a mirror. Under these conditions, total internal reflection is said to take place. Since different wavelengths of light (i.e., light of different colors) correspond to different indices of refraction, the condition for total internal reflection depends not only on the angle at which the light strikes the substrate, but also on the wavelength of the light. In other words, an angle which satisfies the total internal reflection condition for one wavelength may not satisfy this condition for a different wavelength.

When a sufficiently small object or sufficiently small opening in an object is placed in the optical path of light, the light experiences a phenomenon called diffraction in which light rays change direction as they pass around the edge of the object or at the opening thereof. The amount of direction change depends on the ratio between the wavelength of the light and the size of the object/opening. In planar optics there is a variety of optical elements which are designed to provide an appropriate condition for diffraction. Such optical elements are typically manufactured as diffraction gratings which are located on a surface of a light-transmissive substrate. Diffraction gratings can operate in transmission mode, in which case the light experiences diffraction by passing through the gratings, or in reflective mode in which case the light experiences diffraction while being reflected off the gratings

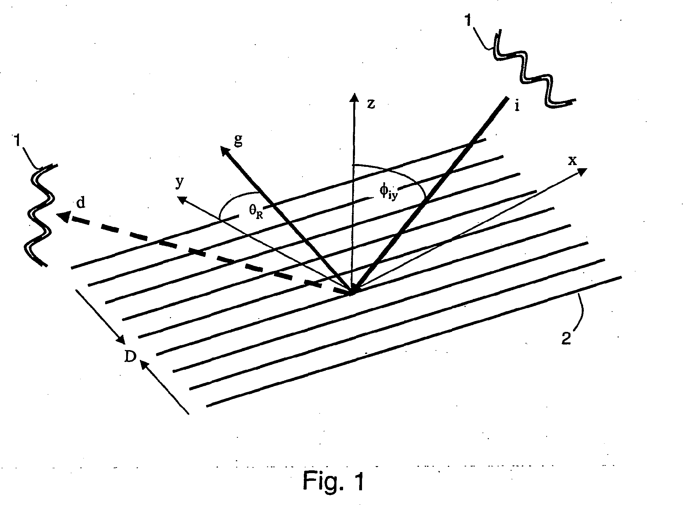

Figure 1 schematically illustrates diffraction of light by a linear diffraction grating operating in transmission mode. One of ordinary skills in the art, provided with the details described herein would know how to adjust the description for the case of reflection mode.

A wavefront **1** of the light propagates along a vector _i_ and impinges upon a grating 2 engaging the *x-y* plane. The normal to the grating is therefore along the z direction and the angle of incidence of the light $\phi_i$ is conveniently measured between the vector _i_ and the *z* axis. In the description below, $\phi_i$ is decomposed into two angles, $\phi_{ix}$ and $\phi_{iy}$, where $\phi_{ix}$ is the incidence angle in the *z-x* plane, and $\phi_{iy}$ is the incidence angle in the *z-y* plane. For clarity of presentation, only $\phi_{iy}$ is illustrated in Figure 1.

The grating has a periodic linear structure along a vector *g*, forming an angle $\theta_R$ with the *y* axis. The period of the grating (also known as the grating pitch) is denoted by *D*. The grating is formed on a light transmissive substrate having an index of refraction denoted by **$n_s$.**

Following diffraction by grating **2,** wavefront **1** changes its direction of propagation. The principal diffraction direction which corresponds to the first order of diffraction is denoted by _d_ and illustrated as a dashed line in Figure 1. Similarly to the angle of incidence, the angle of diffraction $\phi_d$, is measured between the vector _d_ and the z axis, and is decomposed into two angles, $\phi_{dx}$ and $\phi_{dy}$, where $\phi_{dx}$ is the diffraction angle in the z-x plane, and $\phi_{dy}$ is the diffraction angle in the *z-y* plane.

The relation between the grating vector *g*, the diffraction vector _d_ and the incident vector _i_ can therefore be expressed in terms of five angles ($\theta_R$, $\phi_{ix}$, $\phi_{iy}$, $\phi_{dx}$ and $\phi_{dy}$) and it generally depends on the wavelength $\lambda$ of the light and the grating period *D* through the following pair of equations:

$$\sin(\phi_{ix}) - n_S \sin(\phi_{dx}) = (\lambda/D)\sin(\theta_R) \qquad \text{(EQ. 2)}$$

$$\sin(\phi_{iy}) + n_S \sin(\phi_{dy}) = (\lambda/D)\cos(\theta_R). \qquad \text{(EQ. 3)}$$

Without the loss of generality, the Cartesian coordinate system can be selected such that the vector _i_ lies in the *y-z* plane, hence $\sin(\phi_{ix}) = 0$. In the special case in which the vector g lies along the *y* axis, $\theta_R = 0°$ or $180°$, and Equations 2-3 reduce to the following one-dimensional grating equation:

$$\sin\phi_{iy} + n_S \sin\phi_{dy} = \pm\lambda/d. \qquad \text{(EQ. 4)}$$

According the known conventions, the sign of $\phi_{ix}$, $\phi_{iy}$, $\phi_{dx}$ and $\phi_{dy}$ is positive, if the angles are measured clockwise from the normal to the grating, and negative otherwise. The dual sign on the RHS of the one-dimensional grating equation relates to two possible orders of diffraction, +1 and -1, corresponding to diffractions in opposite directions, say, "diffraction to the right" and "diffraction to the left," respectively.

A light ray, entering a substrate through a grating, impinge on the internal surface of the substrate opposite to the grating at an angle which depends on the two diffraction components $\sin(\phi_{dx})$ and $\sin(\phi_{dy})$ according to the following

equation:

$$\phi_d = \sin^{-1}\{[\sin^2(\phi_{dx}) + \sin^2(\phi_{dy})]^{1/2}\} \qquad (EQ.\ 5)$$

When $\phi_d$ is larger than the critical angle $\alpha_c$, the wavefront undergoes total internal reflection and begin to propagate within the substrate.

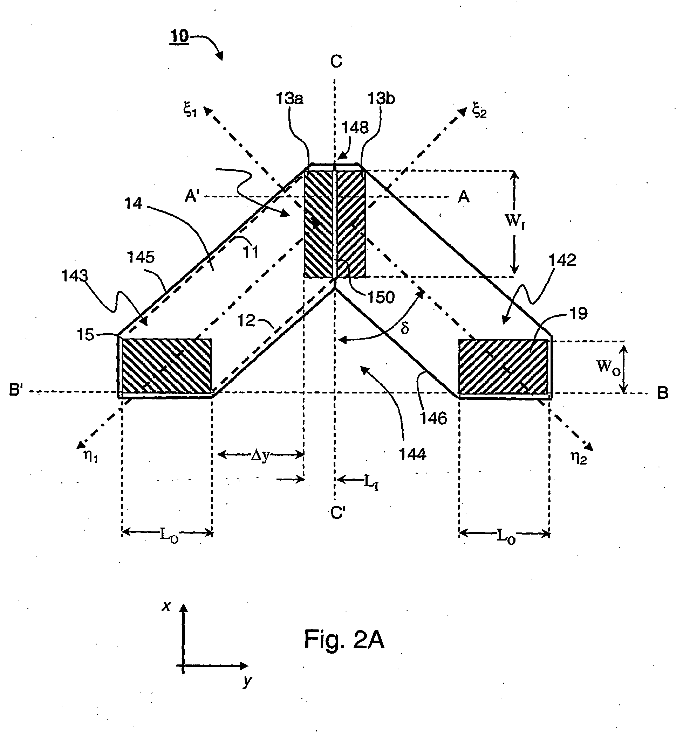

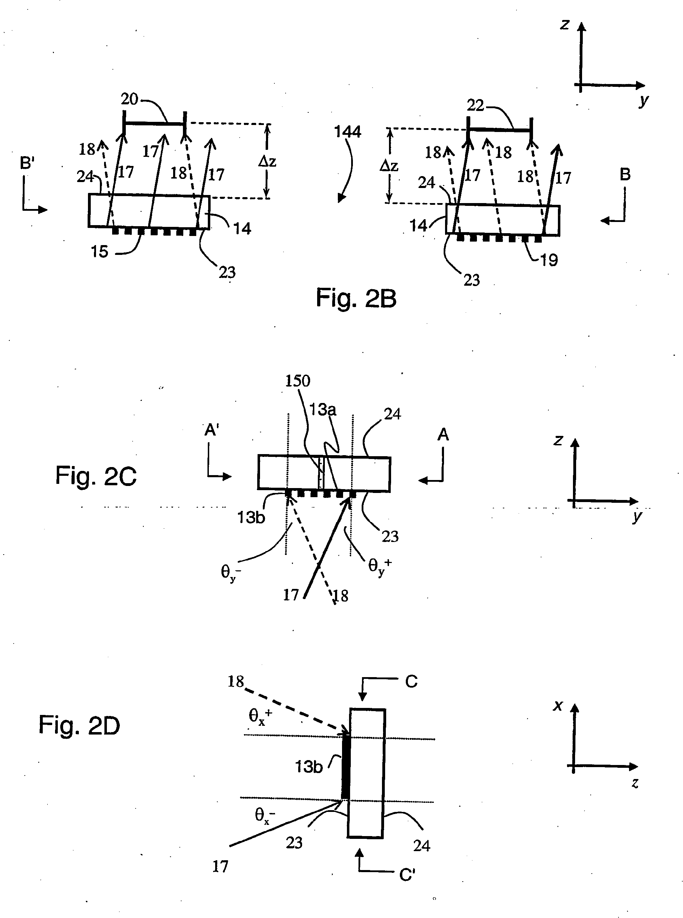

Reference is now made to Figures 2A-D which are schematic illustrations of a front view in the *x-y* plane (Figure 2A), and cross sectional views in the *y-z* plane (Figures 2B-C) and *x-z* plane (Figure 2D) of an optical relay device **10,** according to various exemplary embodiments of the present invention. Figures 2B-D are cross sectional views along lines B---B', A---A' and C---C' shown in Figure 2A. Device **10** is particularly useful as a binocular optical device which can be held or mounted in front of the eyes of a user. The coordinate system of Figure 2 is therefore continently selected such that the *x-y* plane is generally parallel to the face of the user, with the y axis being generally parallel to the line connecting the eyes of the user and the x axis being generally parallel to the symmetry axis of the user's face. The *x-y* plane is interchangeably referred to herein as "the vertical plane," the *x* axis is interchangeably referred to herein as "the vertical axis," and the *y* axis is interchangeably referred to herein as "the horizontal axis." As will be appreciated by one of ordinary skill in the art this terminology describes a typical situation in which device **10** is held or mounted in front of the face while the user is standing or sitting. The z axis is interchangeably referred to herein as "the normal axis."

Device **10** comprises a light-transmissive substrate **14,** shaped as a structure having an apex section **141,** a right section **142** and a left section **143.** Substrate **14** can be made of any light transmissive material, preferably, but not obligatorily, a material having a sufficiently low birefringence.

Sections **142** and **143** are, respectively, sections of a right segment **145** and a left segment **146** which are formed as a unitary part and which define an air gap **144** separating sections **142** and **143.** In the representative example of Figure 2, the shape of substrate **14** is a chevron, in which segments **145** and **146** are straight segments extending substantially to apex section **141.** However this need not necessarily be the case since the shape of substrate **14** can be a chevron-like shape with a substantially straight central segment between the two straight segments which are angled with respect to the central segment. Alternatively, the shape of substrate **14** can be a crescent, in which case segments **145** and **146** are curved, or any one of the known open plane figures with air gaps, which are traditionally referred to as V-shapes, U-shapes, C-shapes, Ω-shapes and the like.

In various exemplary embodiments of the invention device **10** comprises four optical elements generally shown at **13a, 13b, 15** and **19.** Configurations with more or less optical elements are also contemplated. Elements **13a** and **13b** are respectively located on segments **145** and **146** at apex section **141** and serve as input optical elements which redirect the light into substrate **14** such that at least a few light rays experience total internal reflection and propagate within substrate **14.** Elements **15** and 19 are respectively located at sections **143** and **142** and serve as output optical elements which redirect at least a few of the propagating light rays out of substrate **14.**

Thus, device **10** receives optical input from a light source at input elements **13a** and **13b** and transmits optical output from output elements **15** and **19.** When device **10** is held or being mounted in front of the eyes of the user, the optical output of left output element **15** is transmitted into the left eye and the optical output of right output element **19** is transmitted into the right eye. The optical input can be, for example, in the form of image data, generated by an image generating system, so as to allow the user to view a virtual image by positioning his or her eyes at a certain distance from substrate **14.** A preferred lateral separation between the output elements along the horizontal axis y is from a about 30 millimeters to about 80 millimeters.

According to a preferred embodiment of the present invention device **10** further comprises an additional optical element **150** positioned at the boundary **148** between elements **13a** and **13b.** Element **150** serves for reducing or eliminating optical cross talks between the left side and the right side of device **10.** Thus, element **150** can be a light absorber in the form of, e.g., one or more layers of light-absorbent material interposed between the input elements and configured to absorb light rays which propagate in a direction characterized by $-\eta_1$ or by $-\eta_2$. Alternatively, optical element **150** can be a light-scatterer or a light-diffuser which scatters or diffuses the light at boundary **148** so as to prevent transmission of optical information through boundary **148.**

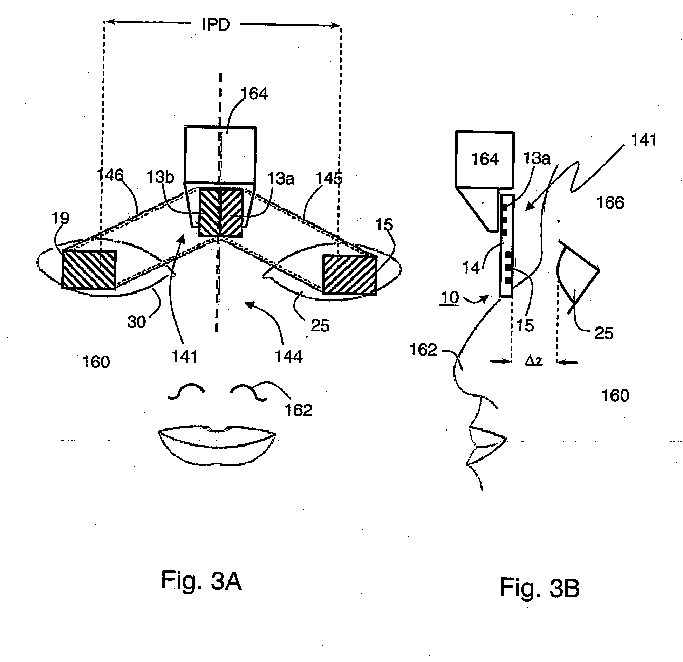

Figures 3A-B illustrate a schematic front view. (Figure 3a) and a schematic side view (Figure 3b) of a preferred positioning of device **10** in front of a face **160** of a user. As shown in Figure 3a, the left eye **25** of the user is placed in front of element **15** and the right eye **30** is of the user is placed in front of element **19.** A light source **164** is in optical communication with both elements **13a** and **13b,** and the optical data from light source **164** is received by **13a** and **13b** and is transmitted through segments **145** and **146** of substrate **14** and coupled out to eyes **25** and **30** by elements **15** and **19,** respectively. Air gap **144** allows the user to hold or mount device **10** close to the face by placing the nose **162** in air gap **144,** such that apex section **141** is in front of the forehead **166** or upper skull.

As illustrated in Figure 3A-B light source **164** is positioned above the line connecting elements **15** and **19.** This is advantageous over conventional virtual image systems, see, e.g., U.S. Patent Application Nos. 10/896,865 and 11/017,920, and International Patent Application, Publication No. WO 2006/008734, where the input element is in line and between the output elements and the light source has to be mounted between the eyes of the user to maintain free optical path between the light source and the input element. In such conventional virtual image systems, the device has to be held farther from the eyes. The structure of substrate **14** in accordance with the present embodiment thus provides a compact solution to the problem of large distance between the relay device and the eyes. It is appreciated that this solution is advantageous also over other conventional virtual image systems solutions in which two synchronized light sources are used (*e.g.*, one above each eye), because a virtual image system having two separated light sources is bulkier, heavier, more expensive and causes discomfort to the user.

The propagation of light rays via total internal reflection is generally along an axis, referred to herein as a "longitudinal axis" and denoted $\eta$. Refereeing again to Figure 2A, two longitudinal axes are shown: a first longitudinal axis $\eta_1$ characterizes light propagation in section **145,** and a second longitudinal axis $\eta_2$ characterizes light propagation in section **146.** Also shown in Figure 2A are directions perpendicular to the longitudinal axis in the vertical plane referred to herein as the "transverse axes" and denoted $\xi_1$ (perpendicular to $\eta_1$) and $\xi_2$ (perpendicular to $\eta_2$). The angle between longitudinal axes $\eta_1$ and $\eta_2$ is referred to as "the apex angle" and denoted $2\delta$. A preferred value for $\delta$ is between 40° and 72°, more preferably between 54° and 64°.

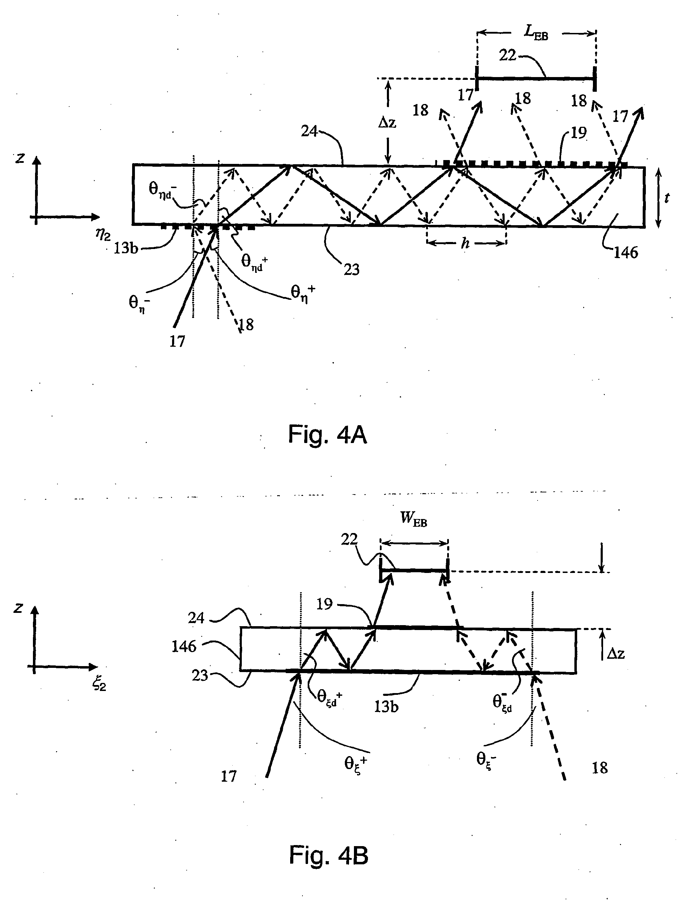

The propagation of light rays within substrate **14** can be better understood with reference Figures 4A-B which are fragmentary view illustrating segment **146** in a plane parallel to the $\eta_2$ and z axes (Figure 4A), and a plane parallel to the $\xi_2$ and z axes (Figure 4B). Thus, elements **13b** and **19** preferably form a right input-output pair, in the sense that light redirected into the substrate by element **13b,** propagates in segment **146** and being coupled out of the substrate by element **19.** One ordinarily skilled in the art would know how to adjust the illustration to the propagation in segment **145.** Thus, elements **13a** and **15** preferably form a left input-output pair, in the sense that light redirected into the substrate by element **13a,** propagates in segment **145** and being coupled out of the substrate by element **15.**

Each of the optical elements can be a refractive element, a reflective element or a diffractive element. In embodiments in which a refractive element is employed, elements **13a, 13b, 15** and/or **19** can comprise a plurality of linearly stretched mini- or micro-prisms, and the redirection of light is generally by the refraction phenomenon described by Snell's law. Thus, for example, when the elements of an input-output pair are refractive elements, the input element of the pair refracts the light into substrate **14** such that at least a few light rays experience total internal reflection and propagate within substrate **14,** and the output element of the pair refracts at least a few of the propagating light rays out of substrate **14.** Refractive elements in the form of mini- or micro-prisms are known in the art and are found, *e.g,* in U.S. Patent Nos. 5,969,869, 6,941,069 and 6,687,010, the contents of which are hereby incorporated by reference.

In embodiments in which a reflective element is employed, any of the input and/or output optical elements can comprise a plurality of dielectric mirrors, and the redirection of light is generally by the reflection phenomenon, described by the basic law of reflection. Thus, for example, when the elements of an input-output pair are reflective elements, the element of the pair reflects the light into substrate **14** such that at least a few light rays experience total internal reflection and propagate within substrate **14,** and the output element of the pair reflect at least a few of the propagating light rays out of substrate **14.** Reflective elements in the form of dielectric mirrors are known in the art and are found, e.g., in U.S. Patent Nos. 6,330,388 and 6,766,082, the contents of which are hereby incorporated by reference.

Element **13a, 13b, 15** and/or **19** can also combine reflection with refraction. For example, the input and/or output optical elements can comprise a plurality of partially reflecting surfaces located in substrate **14.** In this embodiment, the partially reflecting surfaces are preferably parallel to each other. Optical elements of this type are known in the art and found, e.g., in U.S. Patent No. 6,829,095, the contents of which are hereby incorporated by reference.

In embodiments in which diffractive element is employed, the input and/or output elements can comprise a grating and the redirection of light is generally by the diffraction phenomenon. Thus, for example, when the elements of an input-output pair are diffractive elements, the input element of the pair diffracts the light into substrate **14** such that at least a few light rays experience total internal reflection and propagate within substrate **14,** and the output element of the pair diffract at least a few of the propagating light rays out of substrate **14.**

The term "diffracting" as used herein, refers to a change in the propagation direction of a wavefront, in either a transmission mode or a reflection mode. In a transmission mode, "diffracting" refers to change in the propagation direction of a wavefront while passing through the diffractive element; in a reflection mode, "diffracting" refers to change in the propagation direction of a wavefront while reflecting off the diffractive element in an angle different from the basic reflection angle (which is identical to the angle of incidence).

Input elements **13a** and **13b** are designed and constructed such that the angle of at least a few of the light rays redirected thereby is above the critical angle, to enable propagation of the light in the substrate via total internal reflection. The propagated light, after a few reflections within substrate **14,** reaches one of the output elements which redirects the light out of substrate **14.**

According to a preferred embodiment of the present invention at least one of the input and/or output optical elements comprises a linear diffraction grating, operating according to the principles described above. When both elements of an input-output pair are linear ratings, their periodic linear structures are preferably substantially parallel. Thus, when the left input-output pair (elements **13a** and **15**) is formed of linear gratings, the grating vectors of both elements **13a** and **15** are parallel to longitudinal axis $\eta_1$, and the periodic linear structure of elements **13a** and **15** are parallel to transverse axis $\xi_1$. Similarly when the right input-output pair (elements **13b** and **19**) is formed of linear gratings, the grating vectors of both elements **13b** and **19** are parallel to longitudinal axis $\eta_2$, and the periodic linear structure of elements **13b** and 19 are parallel to transverse axis $\xi_2$.

The optical elements can be formed on or attached to any of the surfaces **23** and **24** of substrate **14**. One ordinarily skilled in the art would appreciate that this corresponds to any combination of transmissive and reflective optical elements. Thus, for example, suppose that both input optical elements are formed on surface **23** and both output optical elements are formed on surface **24**. Suppose further that the light impinges on surface **23** and it is desired to diffract the light out of surface **24**. In this case, the optical elements are all transmissive, so as to ensure that entrance of the light through the input optical elements, and the exit of the light through the output optical elements. Alternatively, if the input and output optical elements are all formed on surface **23,** then the input optical elements remain transmissive, so as to ensure the entrance of the light therethrough while the output optical elements are reflective, so as to reflect the propagating light at an angle which is sufficiently small to couple the light out. In such configuration, light can enter the substrate through the side opposite the input optical elements, be diffracted in reflection mode by the input optical elements, propagate within the light transmissive substrate in total internal diffraction and be diffracted out by the output optical elements operating in a transmission mode.

Optical elements **13a** and **13b** are preferably designed such that the larger part of light intensity carried by the incident light ray is directed towards the $+\eta_1$, and the $+\eta_2$ directions, and minimal intensity is directed towards boundary **148**. For example, in the case in which elements **13a** and **13b** are linear diffraction gratings, the use of blazed grating design, as known in the art, can achieve such desired intensity distribution upon diffraction.

Device **10** is preferably designed to transmit light striking substrate **14** at any striking angle within a predetermined range of angles, which predetermined range of angles is referred to of the field-of-view of the device.

The input optical elements are designed to trap all light rays in the field-of-view within the substrate. A field-of-view can be expressed either inclusively, in which case its value corresponds to the difference between the minimal and maximal incident angles, or explicitly in which case the field-of-view has a form of a mathematical range or set. Thus, for example, a field-of-view, $\Omega$, spanning from a minimal incident angle, $\alpha$, to a maximal incident angle, $\beta$, is expressed inclusively as $\Omega = \beta - a$, and exclusively as $\Omega = [\alpha, [\beta]$. The minimal and maximal incident angles are also referred to as rightmost and leftmost incident angles or counterclockwise and clockwise field-of-view angles, in any combination. The inclusive and exclusive representations of the field-of-view are used herein interchangeably.

The field-of-view of device **10** is illustrated in Figures 2C-D and 4A-E by two of its outermost light rays, denoted ray **17** and ray **18** as follows.

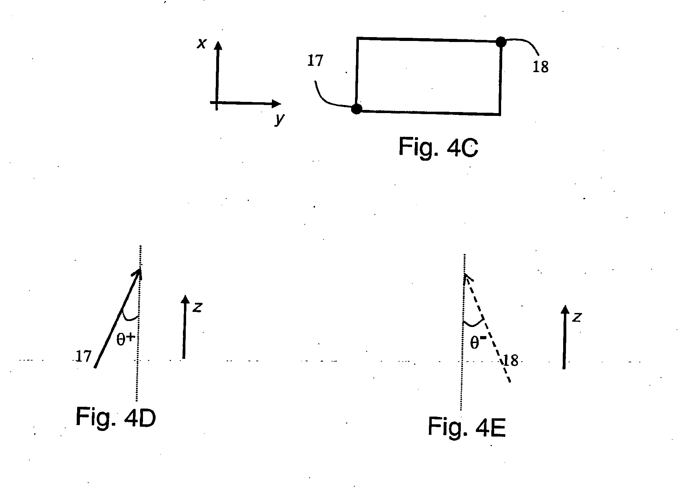

Figures 2C-D and 4A-B schematically illustrate projections of rays **17** and **18** onto the y-z (Figures 2C) x-z (Figures 2D) planes, $\eta$-z (Figure 4A) and $\xi$-z (Figure 4B) planes, respectively. Figure 4C schematically illustrates the field-of-view in a plane orthogonal to the normal axis (parallel to the *x-y* plane). Rays **17** and **18** are points on this plane. For the purpose of simplifying the presentation, the field-of-view in Figure 4C is illustrated as a rectangle, and the straight light connecting the points is the diagonal of the rectangle. Rays **17** and **18** are referred to as the "lower-left" and "upperright" light rays of the field-of-view, respectively.

It is appreciated that the field-of-view can also have a planar shape other than a rectangle, include, without limitation, a square, a circle and an ellipse. One of ordinary skills in the art, provided with the details described herein would know how to adjust the description for non-rectangle field-of-view. Figures 4D and 4E illustrate the outermost light rays in planes which are normal to the substrate and which contain rays **17** and **18.**

Below, the terms "horizontalfield-of-view" and "vertical field-of-view" will be used to describe the ranges of angles within the field-of-view as projected on the y-z and x-z planes respectively.

Thus, Figure 2C schematically illustrates the horizontal field-of-view and Figure 2D schematically illustrates the vertical field-of-view of device **10**. In the horizontal field-of-view illustrates in Figure 2C, the projection of ray **18** is the rightmost ray projection which forms with the normal axis an angle denoted $\theta_y^-$, and the projection of ray **17** is the leftmost ray projection which forms with the normal axis an angle denoted $\theta_y^+$. In the vertical field-of view illustrated in Figure 2D, the projection of ray **18** is the uppermost ray projection which forms with the normal axis an angle denoted $\theta_x^+$, and the projection of ray **17** is the lowermost ray projection which forms with the normal axis an angle denoted $\theta_x^-$,

In exclusive representations, the horizontal field-of-view, denoted $\Omega_y$, is $[\theta_y^-, \theta_y^+]$ and the vertical field-of-view, denoted $\Omega_x$ is $[\theta_x^-, \theta_x^+]$. In the exemplified illustration of Figures 2C and 2D the projections $\theta_x^-$, $\theta_y^-$ are measured anticlockwise from the normal axis, and the projections $\theta_x^+$, $\theta_y^+$ are measured clockwise from the normal axis. Thus, according to the above convention, $\theta_x^-$, $\theta_y^-$ have negative values and $\theta_x^+$, $0_y^+$ have positive values, resulting in a horizontal field-of-view $\Omega_y = \theta_y^+ + |\theta_y^-|$, and a transverse field-of-view $\Omega_x = \theta_x^+ + |0_x^-|$, in inclusive representations.

In exclusive representation, the diagonal field-of-view of device **10** is given by $\Omega = [\theta^-, \theta^+]$, where $\theta^-$ the angle between ray **17** and a line intersecting ray **17** and being parallel to the normal axis, and $\theta^+$ is the angle between ray **18** and a line intersecting ray **18** and being parallel to the normal axis. Figures 4D and 4E illustrate the diagonal field-of-view angles $\theta^-$ and $\theta^+$ in planes containing ray **17** and ray **18,** respectively. The relation between $\theta^\pm$ and their projections $\theta_x^\pm$, $\theta_y^\pm$ are given by Equation 5 above with the substitutions $\theta_d \to \theta^\pm$, $\phi_{dx} \to \theta_x^\pm$ and $\phi_{dy} \to \theta_y^\pm$. Unless specifically stated otherwise, the term "field-of-view angle" refers to a diagonal angle, such as $\theta^\pm$.

The light rays arriving to device **10** can have one or more wavelength. When the light has a plurality of wavelengths, the shortest wavelength is denoted $\lambda_B$ and the longest wavelength is denoted $\lambda_R$, and the range of wavelengths from $\lambda_B$ to $\lambda_R$ is referred to herein as the spectrum of the light.

Irrespectively of the number of different wavelengths of the light, when the light rays in the field-of-view impinge on elements **13a** and **13b,** they are preferably redirected at an angle (defined relative to the normal) which is larger than the critical angle, such that upon striking the other surface of substrate **14,** all the light rays of the field-of-view experiences total internal reflection and propagate within substrate **14.**

When elements **13a-b** are diffractive elements, they diffract rays **17** and **18** into substrate **14** at diffraction angles denoted $\theta_d^+$ and $\theta_d^-$, respectively. Shown in Figures 4A-B are $\theta_{\eta d}^\pm$ (Figure 4A) and $\theta_{\xi d}^\pm$ (Figure 4B), which are the projections of $\theta_d^\pm$ on the $\eta$-z plane and the $\xi$-z plane, respectively. The relation between the incidence angles and the diffraction angles in the present Cartesian coordinate system (see also Figure 2A) are given by Equations 2-5 with $\theta_R = \pi/2 + \delta$ and $\theta_R = \pi/2 - \delta$ for segments **145** and **146** respectively.

While propagating, the rays are reflected from the internal surfaces of substrate **14.** The Euclidian distance between two successive points on the internal surface of the substrate at which a particular light ray experiences total internal reflection is referred to as the "hop length" of the light ray and denoted by "h". The propagated light, after a few reflections within substrate **14,** generally along the longitudinal axis of device **10,** reaches one of the output optical elements which redirect the light out of substrate **14.** Device **10** thus transmits at least a portion of the optical energy carried by each light ray between rays **17** and **18.** When the light rays within the field-of-view originate from an object which emits or reflects light, a viewer can position his or her eyes in front of elements **15** and **19** to see a virtual image of the object.

As shown in Figure 4A, for a single impingement of a light ray on the output element, only a portion of the light energy exits substrate **14.** The remnant of each ray is redirected through an angle, which causes it, again, to experience total internal reflection from the other side of substrate **14.** After a first reflection, the remnant may re-strike the output element, and upon each such re-strike, an additional part of the light energy exits substrate **14.** Thus, a light ray propagating in the substrate via total internal reflection exits the substrate in a form of a series of parallel light rays where the distance between two adjacent light rays in the series is h. Such series of parallel light rays corresponds to a collimated light beam exiting the output elements (see rays **17** and **18** in Figure 2B). Since more than one light ray exit as a series of parallel light rays, a beam of light passing through device **10** is expanded in a manner that the cross sectional area of the outgoing beam is larger than cross sectional area of the incoming beam.

According to a preferred embodiment of the present invention each of the output optical elements **15** and **19** is characterized by planar dimensions selected such that at least a portion of one or more outermost light rays within the field-of-view is redirected by element **15** to a two-dimensional region **20,** and at least a portion of one or more outermost light rays within the field-of-view is redirected by element 19 to a two-dimensional region **22** (see Figure 2B). More preferably, the planar dimensions of elements **15** and **19** are selected such that the light beam redirected by element **15** enters region **20** and light beam redirected by element **19** enters region **22.** Preferably, but not obligatorily, the planar dimensions of region **20** equal the planar dimensions of region **22.** Still preferably, both regions **20** and **22** are at the same predetermined distance $\Delta z$ from light transmissive substrate **14.**

The dimensions of elements **13a, 13b, 15** and **19** are schematically illustrated in Figure 2A. In various exemplary embodiments of the invention device **10** is symmetric about the x axis (with respect to line C---C'). It these embodiments, the dimensions of elements **13a** are similar to the dimensions of element **13b** and the dimensions of elements **15** are similar to the dimensions of element **19.**

To ensure entering of the outermost light ray or the entire outgoing light beam into regions **20** and **22,** the length $L_O$ of elements **15** and **19** is preferably selected to be larger then a predetermined length threshold, $L_{O, min}$, and the width $W_O$ of elements **15** and **19** is preferably selected to be larger then a predetermined width threshold, $W_O$, min. In various exemplary embodiments of the invention the length and width thresholds are given by the following expressions:

$$L_{O,\,min} = 2\,\Delta z\,\tan(\Omega_y/2)$$

$$W_{O,\,min} = 2\,\Delta z\,\tan(\Omega_x/2). \hspace{2cm} \text{(EQ. 6)}$$

When device **10** is used for viewing a virtual image, the user may place his or her left eye within region **20** and right eye within region **22** to view the virtual image. Thus, in this embodiment, regions **20** and **22** are the "eye-box" of device **10,** and $\Delta z$ is approximately the distance between the pupils of the user to substrate **14** (see Figure 3B). The distance $\Delta z$ is referred to herein as the characteristic eye-relief of device **10**. For transmitting an image to the eyes, the length $L_O$ and width $W_O$ of elements **15** and **19** are preferably approximated by $L_O \approx L_{O,\ min} + O_p$, and $W_O \approx W_{O,\ min} + O_p$, respectively, where $O_P$ represents the diameter of the pupil and is typically about 3 millimeters. In various exemplary embodiments of the invention the eye-box is larger than the diameter of the pupil, so as to allow the user to relocate the eye within the eye-box while still viewing the entire virtual image. Thus, denoting the dimensions of regions **20** and **22** by $L_{EB}$ and $W_{EB}$, where $L_{EB}$ is measured along the y axis and $W_{EB}$ is measured along the x axis, the length and width of elements **15** and **19** are preferably:

$$L_O = L_{O,\ min} + L_{EB}$$

$$W_O = W_{O,\ min} + W_{EB}, \qquad\qquad (EQ.\ 7)$$

where each of $L_{EB}$ and $W_{EB}$ is preferably larger than $O_P$, so as to allow the user to relocate the left eye within region **20** and the right eye within region **22** while still viewing the entire field-of-view.

The dimensions of input optical elements **13a** and **13b** are preferably selected to allow all light rays within the field-of-view to propagate in substrate **14** such as to impinge on the area of the respective output elements. In various exemplary embodiments of the invention each of the lengths $L_I$ of input elements **13a** and **13b** equals from about $X$ to about $3X$, where $X$ is preferably a unit hop-length characterizing the propagation of light rays within substrate **14** (see Figure 4A). Typically, $X$ equals the hop-length of the light-ray with the minimal hop-length, which is one of the outermost liglit-rays in the field-of-view (ray **18** in the exemplified illustration of Figure 4A). When the light has a plurality of wavelengths, $X$ is typically the hop-length of one of the outermost light-rays which has the shortest wavelength of the spectrum.

According to a preferred embodiment of the present invention the width $W_O$ of elements **15** and **19** is smaller than the width $W_I$ of elements **13a** and **13b**. $W_I$ is preferably calculated based on the selected shape of substrate **14**. According to a preferred embodiment of the present invention the relation between $W_I$ and Wo is preferably given by the following expression:

$$W_I = W_O + (L_O + \Delta y) \tan \gamma_1 - (L_I + \Delta y) \tan \gamma_2, \qquad\qquad (EQ.\ 8)$$

where $\Delta y$ is the lateral separation within each input-output pair (between element **13a** and element **15,** and between element **13b** and element **19)** along the horizontal axis of device **10,** and $\gamma_1$ and $\gamma_2$ are predetermined angular parameters.

Preferably, $\gamma_1$ and $\gamma_2$ reflate to the propagation direction of one or more of the outermost light rays of the field-of-view within the substrate, as projected on a plane parallel to the substrate. In various exemplary embodiments of the invention $\gamma_1$ and $\gamma_2$ equal the angle formed between the horizontal axis of the substrate and the propagation direction of outermost light rays of the field-of-view, as projected on a plane parallel to the substrate. In the preferred embodiment in which substrate **14** has a structure of a chevron, $\gamma_1$ can be set to the angle formed between the horizontal axis and a straight line connecting the top left corner of element **13a** with the top left corner of element **15** (or the straight line connecting the top right corner of element **13b** with the to right corner of element **19),** see, *e.g.*, line **11** in Figure 2A , and $\gamma_2$ can be the angle formed between the horizontal axis and a straight line connecting the lower right corner of element **13a** with the lower right corner of element **15** (or the straight line connecting the lower left corner of element **13b** with the lower left corner of element **19),** see, *e.g.*, line **12** in Figure 2A.

Thus, a viewer placing his or her eyes in regions **20** and **22** of dimensions $L_{EB} \times W_{EB}$, receives at least a portion of any light ray within the field-of-view, provided the distance between the eyes and the output elements equals $\Delta z$ or is smaller than $\Delta z$.

The preferred value for $\Delta z$ is, without limitation, from about 15 millimeters to about 35 millimeters, the preferred value for $\Delta y$ is, without limitation, from a few millimeters to a few centimeters, the preferred value for $L_{EB}$ is, without limitation, from about 5 millimeters to about 13 millimeters, and the preferred value for $W_{EB}$ is, without limitation, is from about 4 millimeters to about 9 millimeters. For a given field-of-view, selection of large $\Delta z$ results in smaller eye-box dimensions $L_{EB}$ and $W_{EB}$, as known in the art. Conversely, small $\Delta z$ allows for larger eye-box dimensions $L_{EB}$ and $W_{EB}$.

$L_{O,}$ min and $W_{O,\ min}$ are preferably calculated using Equation 6, and together with the selected dimensions of region **20** ($L_{EB}$ and $W_{EB}$), the dimensions of element **15** (Lo and $W_O$) can be calculated using Equation 7.

Once $L_O$ and $W_O$ are calculated, the width $W_I$ of input element **13** is preferably calculated by means of Equation 8 with appropriate values for the predetermined parameters $\Delta y$, $\gamma_1$ and $\gamma_2$. The length of the input elements $L_I$ is generally selected from about 3 millimeters to about 15 millimeters.

As can be understood from the geometrical configuration illustrated in Figures 4A-B, the angles at which light rays **18** and 17 are redirected can differ. As the angles of redirection depend on the incident angles (see, e.g., Equations 2-5 for the case of diffraction), the allowed clockwise ($\theta^+$) and anticlockwise ($\theta^-$) field-of-view angles, are also different. For example, the anticlockwise angle shown in Figure 4A is limited by that angle at which the angle of redirection does not satisfy the condition for total internal reflection. Thus, device **10** supports transmission of asymmetric field-of-view in which, say, the clockwise field-of-view angle is greater than the anticlockwise field-of-view angle. The difference between the absolute values of the clockwise and anticlockwise field-of-view angles can reach more than 70 % of the total field-of-view.

This asymmetry can be exploited in accordance with various exemplary embodiments of the present invention, to enlarge the field-of-view of optical device **10**. According to a preferred embodiment of the present invention, the input optical elements redirect the light into substrate **14** in a manner such that different portions of the light, corresponding to different partial field-of-views, propagate within the substrate in different directions to thereby reach the output optical elements. The output optical elements redirect the different portions of the light out of the light-transmissive substrate.

In accordance with the present embodiments, the planar dimensions of the output and/or input optical elements can be selected to facilitate the transmission of the partial field-of-views. The output optical elements can also be designed and constructed such that the redirection of the different portions of the light is in complementary manner.

The terms "complementarily" or "complementary," as used herein in conjunction with a particular observable or quantity (*e.g.*, field-of-view, image, spectrum), refer to a combination of two or more overlapping or non-overlapping parts of the observable or quantity, which combination provides the information required for substantially reconstructing the original observable or quantity.

In various exemplary embodiments of the invention, the optical elements of the optical relay device are designed to transmit an image covering a wide field-of-view to both eyes of the user. Preferably, the optical relay device of the present embodiments is characterized by a diagonal field-of-view of at least 15° (corresponding to horizontal field-of-view of about 12°), more preferably at least 20° (corresponding to horizontal field-of-view of about 16°), more preferably at least 25° (corresponding to horizontal field-of-view of about 20°), more preferably at least 30° (corresponding to horizontal field-of-view of about 24°). The optical elements are preferably located at fixed locations on the light transmissive substrate, but provide the image for any interpupillary distance from a minimal value denoted $IPD_{min}$ to a maximal value denoted $IPD_{max}$.

The advantage of the present embodiments is that any user with an interpupillary distance IPD satisfying $IPD_{min} \le IPD \le IPD_{max}$ can use the device to view the entire image without having to adjust the size of the device or the separation between the optical elements. The range of IPD in western society grown-ups is from about 53 mm to about 73 mm. Children have further smaller IPD. Other human races generally have different ranges of IPD. A preferred value for $IPD_{min}$ is from about 5mm to about 20 millimeters less than the selected value for $IPD_{max}$, more preferably from about 5mm to about 10 millimeters less than the selected value for $IPD_{max}$, and the two values are preferably selected within the range of human IPD as described above.

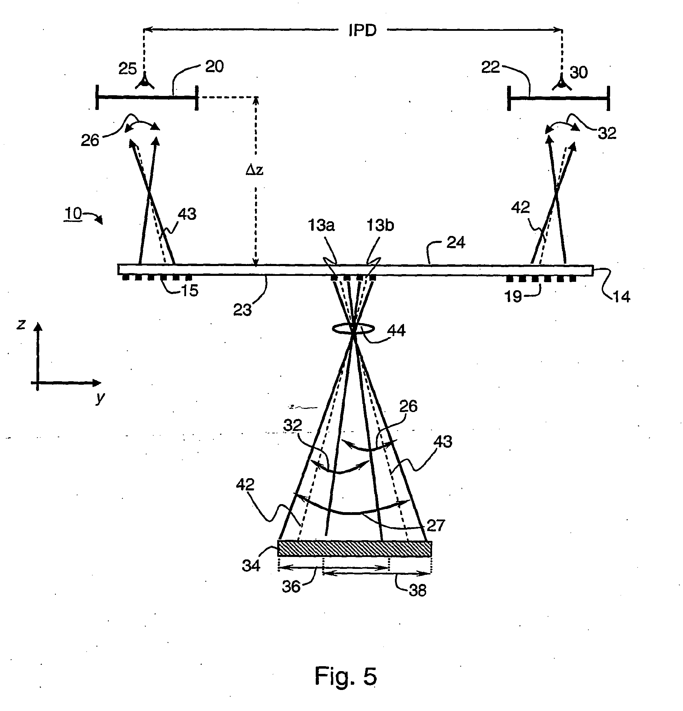

Reference is now made to Figure 5 which is a schematic illustration of a side view of device **10** superimposing the cross sectional views along lines B---B' and AA' of Figure 2A.

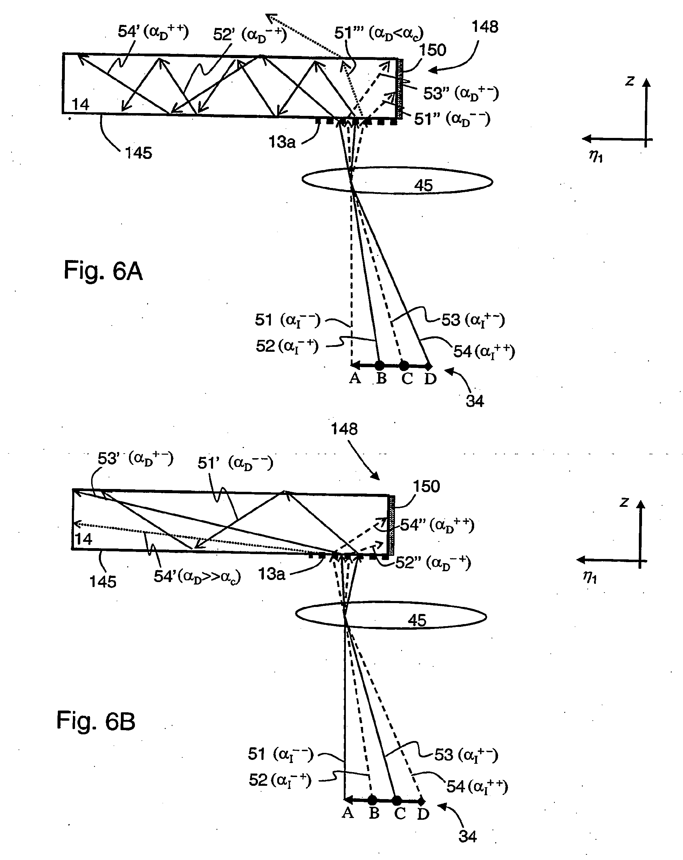

In Figure 5, all optical elements are formed on surface **23** of substrate **14.** However, as stated, this need not necessarily be the case, since, for some applications, it may be desired to form the input/output optical elements on any of the surfaces of substrate **14,** in an appropriate transmissive/reflective combination. Wavefront propagation within substrate **14,** according to various exemplary embodiments of the present invention, is further detailed hereinunder with reference to Figures 6A-B.

Elements **13a** and **13b** preferably redirect the incoming light into substrate **14** in a manner such that different portions of the light, corresponding to different partial fields-of-view, propagate in different directions within substrate **14.** In the configuration exemplified in Figure 5, elements **13a** and **13b** redirects light rays within one asymmetric partial field-of-view, designated by reference numeral **26,** to impinge on element **15,** and another asymmetric partial field-of-view, designated by reference numeral **32,** to impinge on element **19.** Elements **15** and **19** complementarily redirect the respective portions of the light, or portions thereof, out of substrate **14,** to provide left eye **25** with partial field-of-view **26** and right eye **30** with partial field-of-view **32.** Partial field-of-views **26** and **32** form together the field-of-view **27** of device **10.**

Eyes **25** and **30,** as stated, are preferably located at two-dimensional region **20** and **22** respectively. The lateral separation between the horizontal centers of regions **20** and **22** is preferably at least 40 millimeters. Preferably, the lateral separation between the horizontal centers of regions **20** and **22** is less than 80 millimeters. According to a preferred embodiment of the present invention the planar dimensions of elements **15** and **19** are selected such that the portions of outermost light rays are respectively directed to regions **20** and **22,** for any lateral separation between the regions which is larger than 40 millimeters and smaller than 80 millimeters. More preferably, the planar dimensions of elements **15** and **19** are preferably selected such that eyes **25** and **30** are respectively provided with partial field-of-views **26** and **32** for any interpupillary distance IPD satisfying $IPD_{min} \leq IPD \leq IPD_{max}$.

This is preferably ensured by selecting the lengths $L_{EB}$ of regions **20** and **22** according to the following weak inequality:

$$L_{EB} \geq (IPD_{max} - IPD_{min})/2. \qquad (EQ. 9)$$

Once $L_{EB}$ is selected to satisfy Equation 9, the lengths and widths of output elements **15** and **19** can be set according to Equations 7 substantially as described hereinabove. According to a preferred embodiment of the present invention the horizontal center of each of elements **15** and **19** is located at a distance of $(IPD_{max} + IPD_{min})/4$ from the vertical symmetry axis of substrate **14** (line C---C' in Figure 2A).

When device **10** is used for transmitting an image **34**, field-of-view **27** preferably includes substantially all light rays originated from image **34**. Partial fields-of-view **26** and **32** can therefore correspond to different parts of image **34**, which different parts are designated in Figure 5 by numerals **36** and **38**. Thus, as shown in Figure 5, there is at least one light ray **42** which enters device **10** via element **13** and exits device **10** via element **19** but not via element **15**. Similarly, there is at least one light ray **43** which enters device **10** via element **13** and exits device **10** via element **15** but not via element **19**.

Generally, the partial field-of-views, hence also the parts of the image arriving to each eye depend on the wavelength of the light. Therefore, it is not intended to limit the scope of the present embodiments to a configuration in which part **36** is viewed by eye **25** and part **38** viewed by eye **30**. In other words, for different wavelengths, part 36 is viewed by eye **30** and part **38** viewed by eye **25**. For example, when the image is constituted by a light having three colors: red, green and blue, device **10** can be constructed such that eye **25** sees part **38** for the blue light and part **36** for the red light, while eye **30** sees part **36** for the blue light and part **38** for the red light. In such configuration, both eyes see an almost symmetric field-of-view for the green light. Thus, for every color, the two partial fields-of-view compliment each other.

The human visual system is known to possess a physiological mechanism capable of inferring a complete image based on several parts thereof, provided sufficient information reaches the retinas. This physiological mechanism operates on monochromatic as well as chromatic information received from the rod cells and cone cells of the retinas. Thus, in a cumulative nature, the two asymmetric field-of-views, reaching each individual eye, form a combined field-of-view perceived by the user, which combined field-of-view is wider than each individual asymmetric field-of-view.

According to a preferred embodiment of the present invention, there is a predetermined overlap between first **26** and second **32** partial fields-of-view, which overlap allows the user's visual system to combine parts **36** and **38** of image **34**, thereby to perceive the image, as if it has been fully observed by each individual eye.

For example, the optical elements can be constructed such that the exclusive representations of partial fields-of-view **26** and **32** are, respectively, $[-\alpha, \beta]$ and $[-\beta, \alpha]$, resulting in a symmetric combined field-of-view **27** of $[-\beta, \beta]$. It will be appreciated that when $\beta >> \alpha > 0$, the combined field-of-view is considerably wider than each of the asymmetric field-of-views. Device **10** is capable of transmitting a field-of-view of at least 20 degrees, more preferably at least 30 degrees most preferably at least 40 degrees, in inclusive representation.

When the image is a multicolor image having a spectrum of wavelengths, different sub-spectra correspond to different, wavelength-dependent, asymmetric partial field-of-views, which, in different combinations, form different wavelength-dependent combined fields-of-view. For example, a red light can correspond to a first red asymmetric partial field-of view, and a second red asymmetric partial field-of-view, which combine to a red combined field-of view. Similarly, a blue light can correspond to a first blue asymmetric partial field-of-view, and a second blue asymmetric partial field-of-view, which combine to a blue combined field-of-view, and so on. Thus, a multicolor configuration is characterized by a plurality of wavelength-dependent combined field-of-views. According to a preferred embodiment of the present invention the optical elements are designed and constructed so as to maximize the overlap between two or more of the wavelength-dependent combined field-of-views.

In terms of spectral coverage, the design of device **10** is preferably as follows: element **15** provides eye **25** with, say, a first sub-spectrum which originates from part **36** of image **34**, and a second sub-spectrum which originates from part **38** of image **34**. Element **19** preferably provides the complementary information, so as to allow the aforementioned physiological mechanism to infer the complete spectrum of the image. Thus, element **19** preferably provides eye **30** with the first sub-spectrum originating from part **38**, and the second sub-spectrum originating from part **36**.

Ideally, a multicolor image is a spectrum as a function of wavelength, measured at a plurality of image elements. This ideal input, however, is rarely attainable in practical systems. Therefore, the present embodiment also addresses other forms of imagery information. A large percentage of the visible spectrum (color gamut) can be represented by mixing red, green, and blue colored light in various proportions, while different intensities provide different saturation levels. Sometimes, other colors are used in addition to red, green and blue, in order to increase the color gamut. In other cases, different combinations of colored light are used in order to represent certain partial spectral ranges within the human visible spectrum.

In a different form of color imagery, a wide-spectrum light source is used, with the imagery information provided by the use of color filters. The most common such system is using white light source with cyan, magenta and yellow filters, including a complimentary black filter. The use of these filters could provide representation of spectral range or color gamut similar to the one that uses red, green and blue light sources, while saturation levels are attained through the use of different optical absorptive thickness for these filters, providing the well known "grey levels."

Thus, the multicolored image can be displayed by three or more channels, such as, but not limited to, Red-Green-Blue (RGB) or Cyan-Magenta-Yellow-Black (CMYK) channels. RGB channels are typically used for active display systems (*e.g.*, CRT or OLED) or light shutter systems (*e.g.*, Digital Light Processing™ (DLP™) or LCD illuminated with RGB light sources such as LEDs). CMYK images are typically used for passive display systems (*e.g.*, print). Other forms are also contemplated within the scope of the present invention.

When the multicolor image is formed from a discrete number of colors (*e.g.*, an RGB display), the sub-spectra can be discrete values of wavelength. For example, a multicolor image can be provided by an OLED array having red, green and blue organic diodes (or white diodes used with red, green and blue filters) which are viewed by the eye as continues spectrum of colors due to many different combinations of relative proportions of intensities between the wavelengths of light emitted thereby. For such images, the first and the second sub-spectra can correspond to the wavelengths emitted by two of the blue, green and red diodes of the OLED array, for example the blue and red. Device **10** can be constructed such that, say, eye **30** is provided with blue light from part **36** and red light from part **38** whereas eye **25** is provided with red light from part **36** and blue light from part **38,** such that the entire spectral range of the image is transmitted into the two eyes and the physiological mechanism reconstructs the image.

The light arriving at the input optical element of device **10** is preferably collimated. In case the light is not collimated, a collimator **44** can be positioned on the light path between image **34** and the input element.

Collimator **44** can be, for example, a converging lens (spherical or non spherical), an arrangement of lenses and the like. Collimator **44** can also be a diffractive optical element, which may be spaced apart, carried by or formed in substrate **14.** A diffractive collimator may be positioned either on the entry surface of substrate **14**, as a transmissive diffractive element or on the opposite surface as a reflective diffractive element.

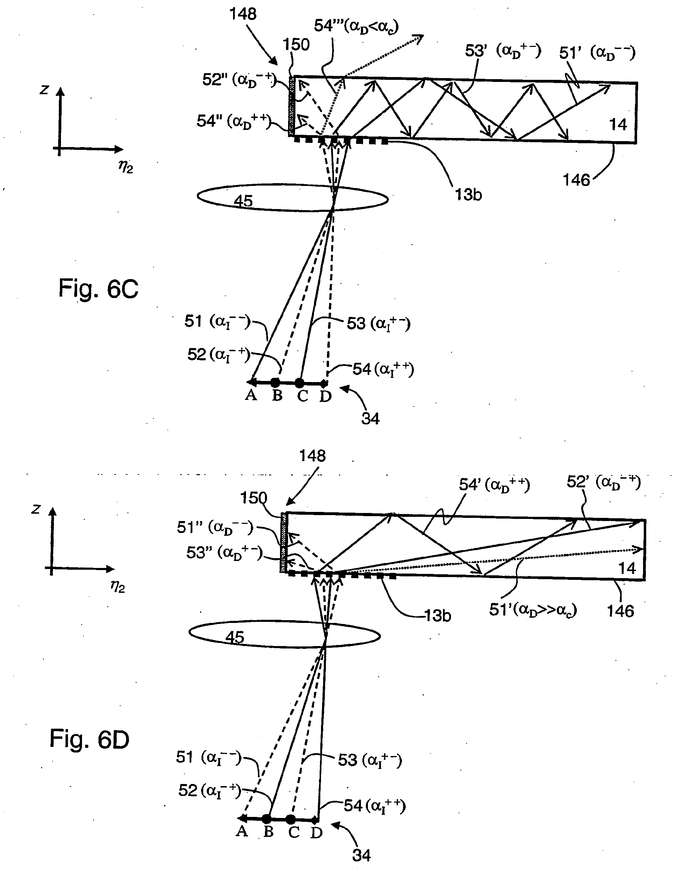

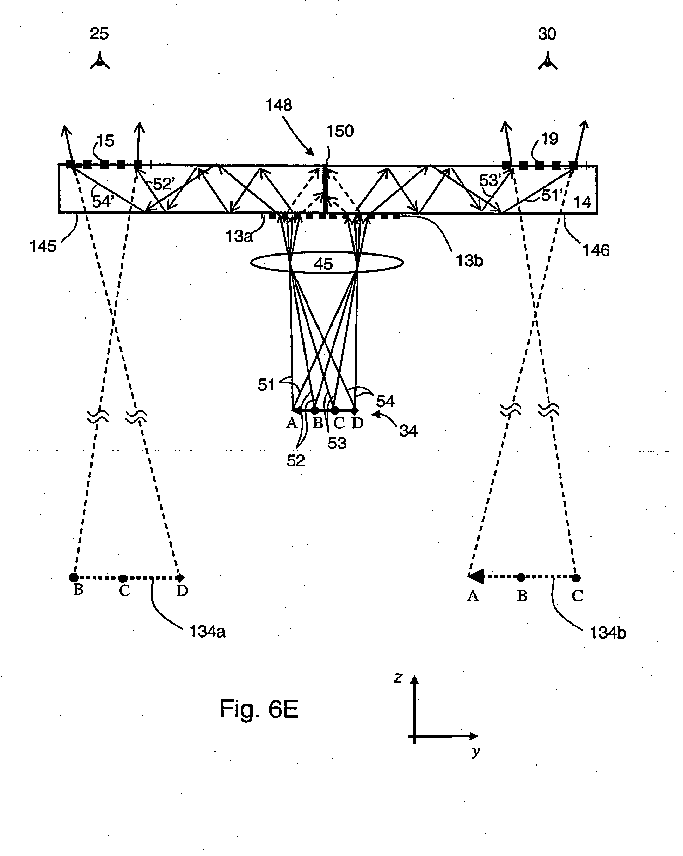

Reference is now made to Figures 6A-D which illustrate wavefront propagation within segments **145** (Figures 6A-B) and **146** (Figures 6C-D), in the preferred embodiments in which different partial field-of-views propagate within in different segments of the light transmissive substrate. Figures 6A-D are schematic fragmentary views of device **10** in planes which are parallel to the $\eta_1$-*z* (Figures 6A-B), and $\eta_2$-*z* (Figure 6C-D) planes. Reference is conjointly made also to Figures 6E-F which are schematic illustrations in which the cross sectional views of device **10** along lines B---B' and A---A' are superimposed.

Four families of light rays are shown in Figures 6A-F, each shown family represents light rays which are emitted from a different point of image **34.** Specifically, light rays families designated by reference numerals **51, 52, 53** and **54** represent light rays which are emitted from points of image **34** designated by reference numerals **A, B, C** and **D,** respectively. The projections of the incident angles of rays **51, 52, 53** and **54** onto the $\eta_1$-*z* or $\eta_2$-*z* plane relative to the normal axis are denoted $\alpha_1^{--}$, $\alpha_1^{-+}$, $\alpha_1^{+-}$ and $\alpha_1^{++}$, respectively.

According to the common conventions, the incident angles are measured with respect to the normal to the substrate (the *z* axis in the present Cartesian coordinate system) at the point of entry to the substrate. As stated, the light entering device **10** is preferably collimated. In the representative example illustrated in Figures 6A-F, a lens **45** is used for collimating the light. In this example, each light ray belonging to a particular family of light rays, is emitted by the respective point of image **34** at a different direction. Once collimated by lens **45,** all light rays of the family impinge on the surface of the substrate substantially at the same incident angle. Alternatively, the light can be provided by an image generating system which emits a collimated light. In this embodiment, all light rays which constitute imagery information of a particular point of the image are parallel.

Thus, in any event, all light rays of family **51** impinge on substrate **14** at the same angle, which has a projection $\alpha_1^{--}$ on the $\eta$-z planes; all light rays of family **52** impinge on substrate **14** at the same angle, which has a projection $\alpha_1^{-+}$ on the $\eta$-z planes; all light rays of family **53** impinge on substrate **14** at the same angle, which has a projection $\alpha_1^{+-}$ on the $\eta$-z planes; and all light rays of family **54** impinge on substrate **14** at the same angle, which has a projection $\alpha_1^{++}$ on the $\eta$-z planes.

As will be appreciated by one of ordinary skill in the art, the first superscript index refer to the position of the respective ray relative to the center of the field-of-view, and the second superscript index refer to the position of the respective ray relative to the normal from which the angle is measured, according to the aforementioned sign convention.

It is to be understood that this sign convention cannot be considered as limiting, and that one ordinarily skilled in the art can easily practice the present invention employing an alternative convention.

Similar notations will be used below for diffraction angles of the rays, with the subscript D replacing the subscript *I*. Denoting the superscript indices by a pair i,j, an incident angle is denoted generally as $\alpha_1^{ij}$, and a projection of a diffraction angle onto the $\eta_1$-$z$ or $\eta_2$-$z$ plane is denoted generally as $\alpha_D{}^{ij}$, where $ij$ = "--", "-+", "+ -" or "- -". The relation between each incident angle, $\alpha_I{}^{ij}$, and its respective diffraction angle, $\alpha_D{}^{ij}$, is given by Equations 2-3, above, with $\theta_R$ = $\pi/2$ + $\delta$ and $\theta_R$ = $\pi/2$ - $\delta$ for segments **145** and **146** respectively.

Points **A** and **D** represent the left end and the right end of image **34,** and points **B** and **C** are located between points **A** and **D.** Thus, rays **51** and **53** are the leftmost and the rightmost light rays of a first asymmetric field-of-view, corresponding to a part **A-C** of image **34,** and rays **52** and **54** are the leftmost and the rightmost light rays of a second asymmetric field-of-view corresponding to a part **B-D** of image **34.** In angular notation, the first and second asymmetric field-of-views are, respectively, $[\alpha_1{}^{--}, \alpha_1{}^{+-}]$ and $[\alpha_1{}^{-+}, \alpha_1{}^{++}]$ (exclusive representations). Note that an overlap field-of-view between the two asymmetric field-of-views is defined between rays **52** and **53,** which overlap equals $[\alpha_1{}^{-+}, \alpha_1{}^{+-}]$ and corresponds to an overlap **B-C** between parts **A-C** and **B-D** of image **34.**

In the configuration shown in Figures 6A-D, a lens **45** magnifies image **34** and collimates the wavefronts emanating therefrom. Image **34** preferably lies in the focal plane of lens **45** thereby ensuring that light rays originated from each point of the image impinge on both elements **13a** and **13b** as a plurality of parallel light rays. For example, light rays **51-54** pass through lens **45,** impinge on both input optical elements **13a** and **13b** at angles $\alpha_I{}^{ij}$ and diffracted thereby into substrate **14** at angles $\alpha_D{}^{ij}$.

For the purpose of clarity of presentation, each light ray emitted from image **34** is labeled in Figures 6A-D according to the incident angle ($\alpha_I{}^{--}$, $\alpha_I{}^{-+}$, $\alpha_I{}^{+-}$ or $\alpha_I{}^{++}$) which characterizes its propagation direction upon impingement on the surface of substrate **14.** In the present representative example in which the light is collimated by lens **45,** the incident angles characterize the propagation direction of the light rays after being collimated. As will be appreciated by one of ordinary skill in the art, since the lens redirects all but principles light rays passing therethrough, the incident angles $\alpha_1{}^{--}$, $\alpha_1{}^{-+}$, $\alpha_1{}^{+-}$ and $\alpha_1{}^{++}$ typically differ from the angles at which the light rays are emitted from image **34.** When an image source which provides collimated light is employed, the incident angles can characterize the propagation direction of the light rays as emitted by the image source.

The diffracted light rays are labeled in Figures 6A-D by their respective diffraction angles ($\alpha_D{}^{--}$, $\alpha_D{}^{-+}$, $\alpha_D{}^{+-}$, $\alpha_D{}^{++}$) which are related to the incident angles through Equations 2-3, with the appropriate value for $\theta_R$, as described hereinabove.

Each diffracted light ray experiences a total internal reflection upon impinging on the inner surfaces of substrate **14** provided that $|\alpha_D{}^{ij}|$, the absolute value of the diffraction angle, is larger than the critical angle $\alpha_c$. Light rays with $|\alpha_D{}^{ij}|$ < $\alpha_c$ do not experience a total internal reflection hence escape from substrate **14.**

A light ray impinging on a particular input element having a grating vector $\eta$ is diffracted both along $\eta$ and along -$\eta$, corresponding to diffraction orders +1 and -1, respectively. Higher diffraction orders may also exist, but are typically suppressed. Consider, for example, a situation in which a light ray impinges on left input element **13a** (Figures 6A-B) and being diffracted at a diffraction angle satisfying $|\alpha_D{}^{ij}|$ > $\alpha_c$. Two secondary light rays are thus formed. The secondary light ray that corresponds to diffraction order +1, propagates via total internal reflection within segment **145** generally along the direction +$\eta_1$. The secondary light ray that corresponds to diffraction order -1, impinges on the boundary **148** between elements **13a** and **13b.** As stated, optical elements **13a** and **13b** are preferably designed such that the larger part of light intensity carried by the incident light ray is directed towards the +$\eta_1$ and the +$\eta_2$ directions, and minimal intensity is directed towards boundary **148.** In this embodiment, the secondary light rays that corresponds to diffraction order -1 have minimal or no effect on wavefront propagation in the other segment of device **10.** Alternatively or additionally, element **150** can be positioned at boundary **148,** in which case cross talks between the input elements is prevented or reduced, via absorption, scattering and/or diffusion of light rays. Similarly, a light ray which impinges on right input element **13b** (Figures 6C-D) and which is diffracted at a diffraction angle satisfying $|\alpha_D{}^{ij}|$ > $\alpha_c$, is also split into two secondary light rays. The secondary light ray that corresponds to diffraction order +1, propagates via total internal reflection within segment **146** generally along the direction +$\eta_2$, and the secondary light ray that corresponds to diffraction order -1, impinges on boundary **148** and optionally element **150** as explained above.

On the other hand, no propagation via total internal reflection takes place for diffraction angles which are smaller than $\alpha_c$. Thus, a light ray splits into two secondary light rays such that diffraction order +1 is at an angle which is smaller than $\alpha_c$, does not propagate via total internal reflection because the +1 diffraction order escapes from the substrate and the -1 diffraction order is absorbed by boundary **148.**

To ease the understanding of the illustrations in Figures 6A-B, secondary rays which are diffracted to propagate in the respective segment via total internal reflection are designated by a single prime (') and secondary rays which are absorbed in boundary **148** are designated by a double prime ("). Secondary rays which do not satisfy the total internal reflection condition are designated by a triple prime (''').

Reference is now made to Figure 6A showing segment **145** in a preferred embodiment of in which $|\alpha_D{}^{-+}|$ = $|\alpha_D{}^{+-}|$ = $\alpha_c$. Shown in Figure 6A are rays **52'** and **54'** which propagate in segment **145** and rays **51"** and **53"** which are absorbed by boundary **148.** Also shown is ray **51''',** which does not undergo total internal reflection, and exits substrate **14** upon reaching surface **24.** A complementary situation is illustrated in Figure 6C, for segment **146.** As shown, rays **51'** and **53'** propagate in segment **146,** and rays **52"** and **54"** are absorbed by boundary **148,** and ray **54'''** exits substrate

14. Thus, all light rays between rays **52** and **54** propagate within segment **145,** while all light rays between rays **51** and **53** propagate within segment **146.** On the other hand, the light rays between rays **53** and **54** propagate within segment **145** but not within segment **146,** while the light rays between rays **51** and **52** propagate within segment **146** but not within segment **145.** The light rays corresponding to the overlap between the asymmetric field-of-views (between rays **52** and **53**), propagate in both segments.

Thus, Figures 6A and 6C depict a preferred embodiment in which light rays of the asymmetrical field-of-view defined between rays **51** and **53** reach second output optical element **19** (not shown in Figures 6A and 6C), and light rays of the asymmetrical field-of-view defined between rays **52** and **54** reach first output optical element **15** (not shown in Figure 6A and 6C).

In another preferred embodiment, illustrated in Figures 6B and 6D, the light rays at the largest entry angle are diffracted at diffraction angles which are larger than $\alpha_c$, hence do not escape from substrate **14.** However, whereas some secondary rays experience a few reflections within substrate **14,** and thus successfully reach its respective output optical element, the diffraction angle of other secondary rays is too large for the secondary rays to impinge the other side of substrate **14.** Such light secondary rays do not properly propagate via total internal reflection and do not reach the output elements.

Specifically shown in Figure 6B are original rays **51, 52, 53** and **54** and secondary rays **51', 52", 53', 54'** and **54":** rays **52"** and **54"** are absorbed by boundary **148;** rays **51'** and **53'** propagate in segment **145** via total internal reflection to impinge on element **15;** and ray **54'** either diffracts at an angle $\alpha_D \gg \alpha_c$ which is too large to successfully reach element **15,** or evanesces. A complementary situation is illustrated in Figure 6D, for segment **146:** rays **51"** and **53"** are absorbed by boundary **148;** rays **52'** and **54'** propagate in segment **146** via total internal reflection to impinge on element **19;** and ray **51'** either diffracts at an angle $\alpha_D \gg \alpha_c$ which is too large to successfully reach element **19,** or evanesces.

According to the presently preferred embodiment of the invention, input element **13a** is designed and constructed such that $\alpha_D^{+-}$ (the diffraction angle of ray **53'** in Figure 6B) is the largest angle for which a diffracted light ray successfully reaches output element **15,** and ($\alpha_D^{-+}$ (the diffraction angle of ray **52'** in Figure 6D) is the largest angle for which a diffracted light ray successfully reaches output element **19.** Thus, Figures 6B and 6D depict a preferred embodiment in which light rays of the asymmetrical field-of-view defined between rays **51** and **53** reach output optical element **15,** and light rays of the asymmetrical field-of-view defined between rays **52** and 54 reach output optical element **15.**

It is appreciated that although the wave propagation scenarios are described above in the context of two separate embodiments, they may also be provided in combination in a single embodiment. Specifically, since the relation between the incident and diffraction angles depends on the wavelength of the light, one wave propagation scenario can be realized for one sub-spectrum while the other scenario can be realized for another sub-spectrum. For example, the scenario described in the context of Figures 6A and 6C can be realized for wavelengths in the green-to-blue part of the visible spectrum while the context of Figures 6B and 6D can be realized for the red-to-green part of the visible spectrum. Thus, the left input-output pair (elements **13a** and **15**) transmits via segment **145** green-to-blue light rays from part **B-D** of image **34,** and red-to-green light rays from part **A-C** of image **34.** Similarly, the right input-output pair (elements **13b** and **19**) transmits via segment **146** red-to-green light rays from part **B-D** of image **34,** and green-to-blue light rays from part **A-C** of image **34.**

Figures 6E-F are schematic illustrations in which the cross sectional views of device **10** along lines B---B' and A---A' are superimposed to show light propagation in both segments **145** and 146. Also shown in Figures 6E-F are virtual images **134a** and **134c** as viewed by the left eye **25,** and virtual images **134b** and **134d** as viewed by the right eye **30.** As will be appreciated by one of ordinary skill in the art, virtual images **134a-d** are not projected onto or emitted from a viewing surface, because the light rays which constitute image **34** are collimated upon entering and exiting device **10.** Thus, there are no real light rays which connect virtual images **134a-d** and the eyes. Each eye, thus perceives a virtual image which is typically located at infinity, and, in any event, farther from the eye than original image **34.** Virtual images **134a-d** are therefore enlarged with respect to the original image.

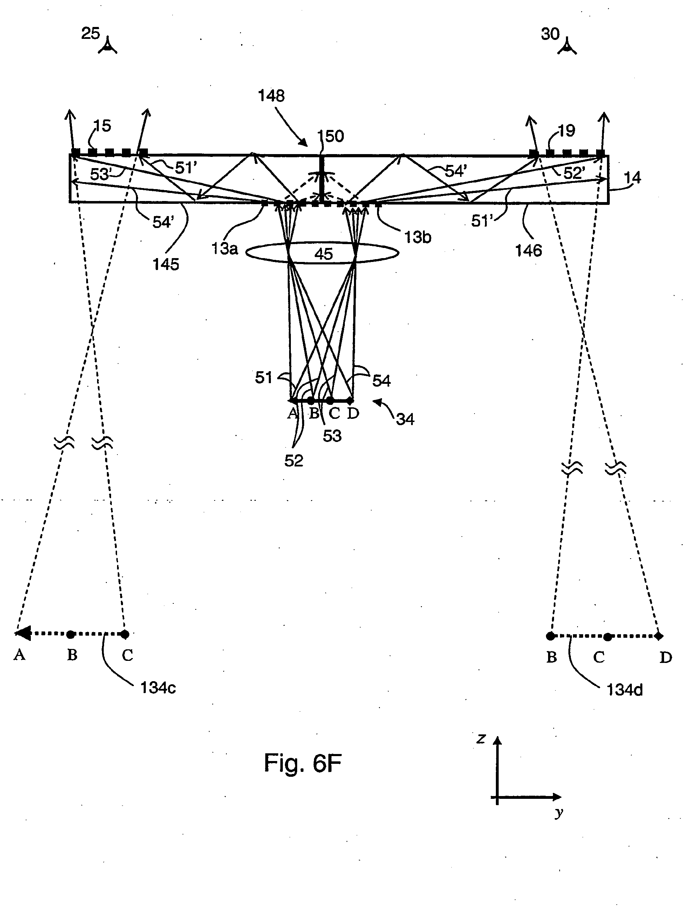

The illustration of Figure 6E is particularly applicable to the shorter wavelengths of the spectrum (say from green to blue), where element **15** transmits a (virtual) image **134a** consisting of part **B-D** of image **34,** while element **19** transmits a (virtual) image **134b** consisting of part **A-C** of image **34.** The illustration of Figure 6F is particularly applicable to the longer wavelengths of the spectrum (say from red to green), where element **19** transmits a virtual image **134d** consisting of part **B-D,** while element **15** transmits a virtual image **134c** consisting of part **A-C** of image **34.** Any of the above embodiments can be successfully implemented by a judicious design of the input/output optical elements and the substrate.

For example, as stated, the input and output optical elements can be linear diffraction gratings in which members of the same input-output pair has identical periods and being in a parallel orientation. This embodiment is advantageous because it is angle-preserving. Specifically, the identical periods and parallelism of the linear gratings ensure that the relative orientation between light rays exiting the substrate is similar to their relative orientation before the impingement on the input optical element. Consequently, light rays emanating from a particular point of the overlap part **B-C** of image

**EP 1 943 556 B1**

**34,** hence reaching both eyes, are parallel to each other. Thus, such light rays can be viewed by both eyes as arriving from the same angle in space. It will be appreciated that with such configuration viewing convergence is easily obtained without eye-strain or any other inconvenience to the viewer, unlike the prior art binocular devices in which relative positioning and/or relative alignment of the optical elements is necessary.

In a preferred embodiment in which surfaces **23** and **24** of substrate **14** are substantially parallel, the optical elements can be designed, for a given spectrum, solely based on the value of $\theta^-$ and the value of the shortest wavelength $\lambda_B$. For example, when the optical elements are linear gratings, the period, $D$, of the gratings can be selected based on $\theta^-$ and $\lambda_B$, irrespectively of the optical properties of substrate **14** or any wavelength longer than $\lambda_B$.

According to a preferred embodiment of the present invention $D$ is selected such that the ratio $\lambda_B/D$ is from about 1 to about 2. A preferred expression for D is given by the following equation:

$$D = \lambda_B/[n_A(1 - \sin \theta^-)]. \qquad \text{(EQ. 10)}$$

It is appreciated that $D$, as given by Equation 10, is a maximal grating period. Hence, in order to accomplish total internal reflection $D$ can also be smaller than $\lambda_B/[n_A(1-\sin \theta^-)]$.

Substrate **14** is preferably selected such as to allow light having any wavelength within the spectrum and any striking angle within the field-of-view to propagate in substrate **14** via total internal reflection.

According to a preferred embodiment of the present invention the refraction index of substrate **14** is larger than $\lambda_R/D + n_A\sin(\theta^+)$. More preferably, the refraction index, $n_s$, of substrate **14** satisfies the following equation:

$$n_S \geq [\lambda_R/D + n_A\sin(\theta^+)]/\sin(\alpha_D^{MAX}). \qquad \text{(EQ. 11)}$$

where $\alpha_D^{MAX}$ is the largest diffraction angle, $e.g.$, the diffraction angle of the light ray **17.** There are no theoretical limitations on $\alpha_D^{MAX}$, except from a requirement that it is positive and smaller than 90 degrees. $\alpha_D^{MAX}$ can therefore have any positive value smaller than 90°. Various considerations for the value $\alpha_D^{MAX}$ are found in U.S. Patent No. 6,757,105, the contents of which are hereby incorporated by reference.

The thickness, $t$, of substrate **14** is preferably from about 0.1 mm to about 5 mm, more preferably from about 1 mm to about 3 mm, even more preferably from about 1 to about 2.5 mm. For multicolor use, $t$ is preferably selected to allow simultaneous propagation of plurality of wavelengths, $e.g.$, $t > 10\ \lambda_R$. The length of each of segments **145** and **146** of substrate **14** is preferably from about 10 mm to about 100 mm. Device **10** is capable of transmitting light having a spectrum spanning over at least 100 nm. More specifically, the shortest wavelength, $\lambda_B$, generally corresponds to a blue light having a typical wavelength of between about 400 to about 500 nm and the longest wavelength, $\lambda_R$, generally corresponds to a red light having a typical wavelength of between about 600 to about 700 nm.

According to a preferred embodiment of the present invention the period, $D$, of the gratings and/or the refraction index, $n_s$, of the substrate can be selected so to provide the two asymmetrical field-of-views, while ensuring a predetermined overlap therebetween. This can be achieved in more than one way.

Hence, in one embodiment, a ratio between the wavelength, $\lambda$, of the light and the period D is larger than or equal a unity:

$$\lambda/D \geq 1. \qquad \text{(EQ. 12)}$$

This embodiment can be used to provide an optical device operating according to the aforementioned principle in which there is no mixing between light rays of the non-overlapping parts of the field-of-view (see Figure 6A).

In another embodiment, the ratio $\lambda/D$ is smaller than the refraction index, $n_s$, of the substrate. More specifically, $D$ and $n_s$ can be selected to comply with the following inequality:

$$D > \lambda/(n_s\, p), \qquad \text{(EQ. 13)}$$

where $p$ is a predetermined parameter which is smaller than 1.

The value of $p$ is preferably selected so as to ensure operation of the device according to the principle in which some mixing is allowed between light rays of the non-overlapping parts of the field-of-view, as further detailed hereinabove (see Figure 6B). This can be done for example, by setting $p = \sin(\alpha_D^{MAX})$, where $(\alpha_D^{MAX})$ is a maximal diffraction angle.

Because there are generally no theoretical limitations on $\alpha_D^{MAX}$ (apart from a requirement that its absolute value is smaller than 90°), it may be selected according to any practical considerations, such as cost, availability or geometrical limitations which may be imposed by a certain miniaturization necessity. Hence, in one embodiment, further referred to herein as the "at least one hop" embodiment, $\alpha_D^{MAX}$ is selected so as to allow at least one reflection within a predetermined distance x which may vary from about 30 mm to about 80 mm.

For example, for a glass substrate, with an index of refraction of $n_s$ = 1.5 and a thickness of 2 mm, a single total internal reflection event of a light having a wavelength of 465 nm within a distance $x$ of 34 mm, corresponds to $\alpha_D^{MAX}$ = 83.3°.

In another embodiment, further referred to herein as the "flat" embodiment, $\alpha_D^{MAX}$ is selected so as to reduce the number of reflection events within the substrate, *e.g.*, by imposing a requirement that all the diffraction angles will be sufficiently small, say, below 80°.

In an additional embodiment, particularly applicable to those situations in the industry in which the refraction index of the substrate is already known (for example when device 10 is intended to operate synchronically with a given device which includes a specific substrate), Equation 13 may be inverted to obtain the value of *p* hence also the value of $\alpha_D^{MAX} = \sin^{-1}p$.

As stated, device **10** can transmit light having a plurality of wavelengths. According to a preferred embodiment of the present invention, for a multicolor image the gratings period is preferably selected to comply with Equation 12, for the shortest wavelength, and with Equation 13, for the longest wavelength. Specifically:

$$\lambda_R/(n_s\,p) \le D \le \lambda_B\,; \qquad\qquad\qquad (\text{EQ. 14})$$

where $\lambda_B$ and $\lambda_R$ are, respectively, the shortest and longest wavelengths of the multicolor spectrum. Note that it follows from Equation 12 that the index of refraction of the substrate should satisfy, under these conditions, $n_s\,p \ge \lambda_R/\lambda_B$.

The grating period can also be smaller than the sum $\lambda_B + \lambda_R$, for example:

$$D = \frac{\lambda_B + \lambda_R}{n_S \sin(\alpha_D^{MAX}) + n_A}. \qquad\qquad (\text{EQ. 15})$$

According to an additional aspect of the present invention there is provided a system 100 for providing an image to a user in a wide field-of-view.

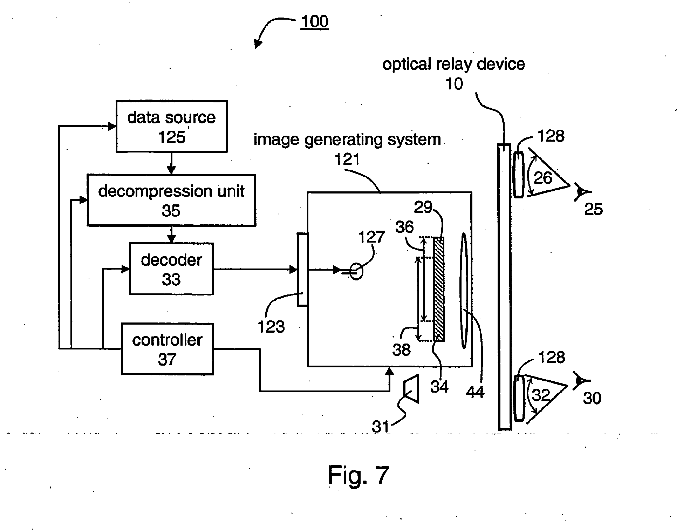

Reference is now made to Figure 7 which is a schematic illustration of system **100,** which, in its simplest configuration, comprises optical relay device **10** for transmitting image **34** into first eye **25** and second eye **30** of the user, and an image generating system **121** for providing optical relay device **10** with collimated light constituting the image.

Image generating system **121** can be either analog or digital. An analog image generating system typically comprises a light source **127,** at least one image carrier **29** and a collimator **44.** Collimator **44** serves for collimating the input light, if it is not already collimated, prior to impinging on substrate **14.** In the schematic illustration of Figure 7, collimator **44** is illustrated as integrated within system **121,** however, this need not necessarily be the case since, for some applications, it may be desired to have collimator **44** as a separate element. Thus, system **121** can be formed of two or more separate units. For example, one unit can comprise the light source and the image carrier, and the other unit can comprise the collimator. Collimator **44** is positioned on the light path between the image carrier and the input element of device **10.**

Any collimating element known in the art may be used as collimator **44,** for example a converging lens (spherical or non spherical), an arrangement of lenses, a diffractive optical element and the like. The purpose of the collimating procedure is for improving the imaging ability.

In case of a converging lens, a light ray going through a typical converging lens that is normal to the lens and passes through its center, defines the optical axis. The bundle of rays passing through the lens cluster about this axis and may be well imaged by the lens, for example, if the source of the light is located as the focal plane of the lens, the image constituted by the light is projected to infinity.

Other collimating means, *e.g.*, a diffractive optical element, may also provide imaging functionality, although for such means the optical axis is not well defined. The advantage of a converging lens is due to its symmetry about the optical axis, whereas the advantage of a diffractive optical element is due to its compactness.

Representative examples for light source **127** include, without limitation, a lamp (incandescent or fluorescent), one or more LEDs or OLEDs, and the like. Representative examples for image carrier **29** include, without limitation, a miniature slide, a reflective or transparent microfilm and a hologram. The light source can be positioned either in front of the image carrier (to allow reflection of light therefrom) or behind the image carrier (to allow transmission of light therethrough). Optionally and preferably, system **121** comprises a miniature CRT. Miniature CRTs are known in the art and are commercially available, for example, from Kaiser Electronics, a Rockwell Collins business, of San Jose, California.

A digital image generating system typically comprises at least one display and a collimator. The use of certain displays may require, in addition, the use of a light source. In the embodiments in which system **121** is formed of two or more separate units, one unit can comprise the display and light source, and the other unit can comprise the collimator.

Light sources suitable for a digital image generating system include, without limitation, a lamp (incandescent or fluorescent), one or more LEDs (*e.g.*, red, green and blue LEDs) or OLEDs, and the like. Suitable displays include, without limitation, rear-illuminated transmissive or front-illuminated reflective LCD, OLED arrays, Digital Light Processing™ (DLP™) units, miniature plasma display, and the like.. A positive display, such as OLED or miniature plasma display, may not require the use of additional light source for illumination. Transparent miniature LCDs are commercially available, for example, from Kopin Corporation, Taunton, Massachusetts. Reflective LCDs are are commercially available, for example, from Brillian Corporation, Tempe, Arizona. Miniature OLED arrays are commercially available, for example, from eMagin Corporation, Hopewell Junction, New York. DLP™ units are commercially available, for example, from Texas Instruments DLP™ Products, Plano, Texas. The pixel resolution of the digital miniature displays varies from QVGA (320 × 240 pixels) or smaller, to WQUXGA (3840 × 2400 pixels).

According to a preferred embodiment of the present invention system **100** comprises a data source **125** which can communicate with system **121** via a data source interface **123.** Any type of communication can be established between interface **123** and data source **125,** including, without limitation, wired communication, wireless communication, optical communication or any combination thereof. Interface **123** is preferably configured to receive a stream of imagery data (*e.g.*, video, graphics, etc.) from data source **125** and to input the data into system **121.** Many types or data sources are contemplated. According to a preferred embodiment of the present invention data source **125** is a communication device, such as, but not limited to, a cellular telephone, a personal digital assistant and a portable computer (laptop). Additional examples for data source **125** include, without limitation, television apparatus, portable television device, satellite receiver, video cassette recorder, digital versatile disc (DVD) player, digital moving picture player (*e.g.*, MP4 player), digital camera, video graphic array (VGA) card, and many medical imaging apparatus, *e.g.*, ultrasound imaging apparatus, digital X-ray apparatus (*e.g.*, for computed tomography) and magnetic resonance imaging apparatus.

In addition to the imagery information, data source **125** may generates also audio information. The audio information can be received by interface **123** and provided to the user, using an audio unit **31** (speaker, one or more earphones, *etc.*).

According to various exemplary embodiments of the present invention, data source **125** provides the stream of data in an encoded and/or compressed form. In these embodiments, system **100** further comprises a decoder **33** and/or a decompression unit **35** for decoding and/or decompressing the stream of data to a format which can be recognized by system **121.** Decoder **33** and decompression unit **35** can be supplied as two separate units or an integrated unit as desired.

System **100** preferably comprises a controller **37** for controlling the functionality of system **121** and, optionally and preferably, the information transfer between data source **125** and system **121.** Controller **37** can control any of the display characteristics of system **121,** such as, but not limited to, brightness, hue, contrast, pixel resolution and the like. Additionally, controller **37** can transmit signals to data source **125** for controlling its operation. More specifically, controller **37** can activate, deactivate and select the operation mode of data source **125.** For example, when data source **125** is a television apparatus or being in communication with a broadcasting station, controller **37** can select the displayed channel; when data source **125** is a DVD or MP4 player, controller **37** can select the track from which the stream of data is read; when audio information is transmitted, controller **37** can control the volume of audio unit **31** and/or data source **125.**

System **100** or a portion thereof (*e.g.*, device **10**) can be integrated with a wearable device, such as, but not limited to; a helmet or spectacles, to allow the user to view the image, preferably without having to hold optical relay device **10** by hand.

Device **10** can also be used in combination with a vision correction device **128,** for example, one or more corrective lenses for correcting, *e.g.*, short-sightedness (myopia). In this embodiment, the vision correction device is preferably positioned between the eyes and device **10**. According to a preferred embodiment of the present invention system **100** further comprises correction device **128,** integrated with or mounted on device **10.**

The present embodiments can also be provided as add-ons to the data source or any other device capable of transmitting imagery data. Additionally, the present embodiments can also be used as a kit which includes the data source, the image generating system, the binocular device and optionally the wearable device. For example, when the data source is a communication device, the present embodiments can be used as a communication kit.

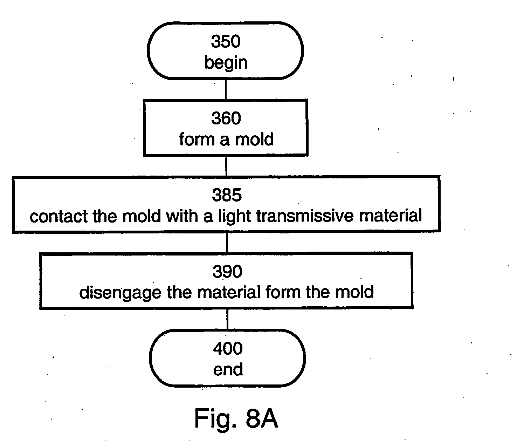

The present embodiments successfully provide a method suitable for manufacturing the optical relay device, in the preferred embodiments in the optical relay device comprises diffraction gratings. The method according to various exemplary embodiments of the present invention is illustrated in the flowchart diagrams of Figures 8A-D.

It is to be understood that, unless otherwise defined, the method steps described hereinbelow can be executed either contemporaneously or sequentially in many combinations or orders of execution. Specifically, the ordering of the flowchart diagrams of Figures 8A-D is not to be considered as limiting. For example, two or more method steps, appearing in the following description or in the flowchart of Figures 8A-D in a particular order, can be executed in a different order (*e.g.*, a reverse order) or substantially contemporaneously. Additionally, several method steps described below are optional and may not be executed.

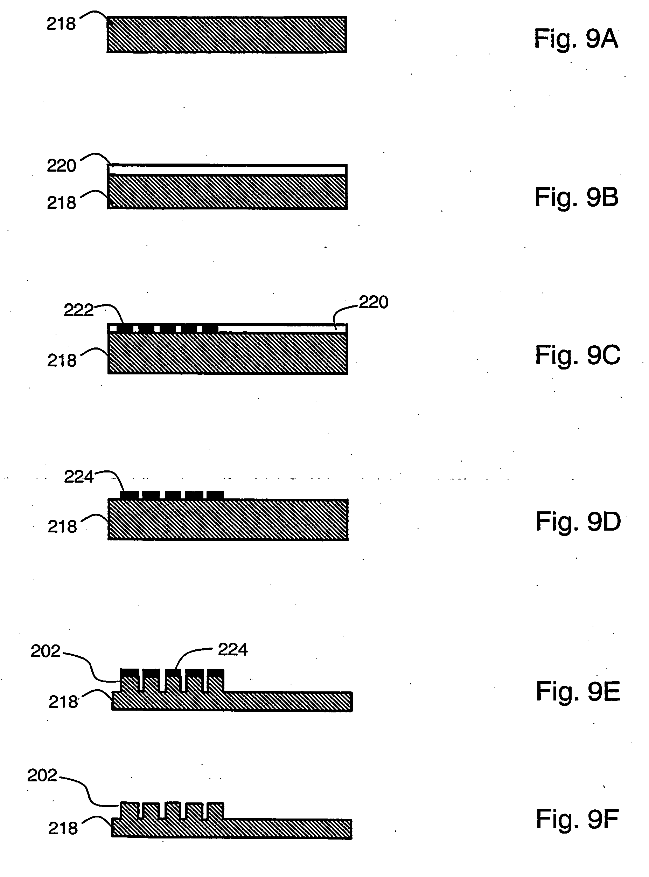

An exemplified process for manufacturing the optical relay device, according to a preferred embodiment of the present invention is provided in the Examples section that follows (see Example 3 and the schematic process illustrations of Figures 9A-L).

The method begins at step **350** and continues to step **360** in which a mold having one or more patterns corresponding to an inverted shape of the linear grating is formed. The mold is preferably configured to receive a light transmissive material and to shape the material as a structure such as the structure of substrate **14** described above. Thus, according to the presently preferred embodiment of the invention the mold has a cavity having the desired shape of the light transmissive substrate. The number of patterns equals the number of linear gratings which are to be formed on the substrate of the optical relay device. In various exemplary embodiments of the invention the mold is configured to form additional optical element **150** for reducing optical cross-talks between the input gratings, as further detailed hereinabove. Thus, the cavity of the mold may include element **150** therein or it may be manufactured with an insertion so as to allow assembling element **150** into the apex section of the structure after molding.

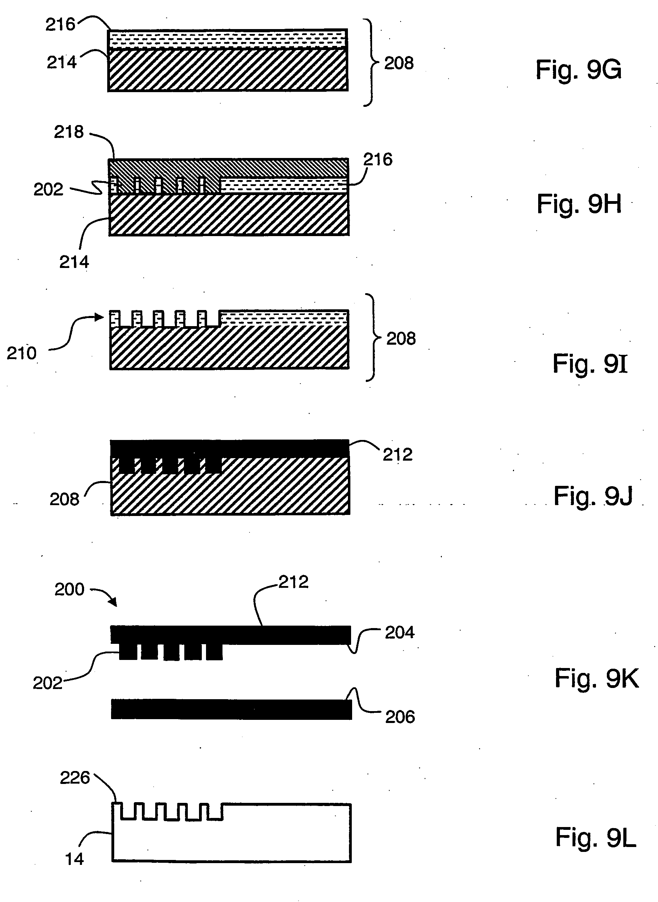

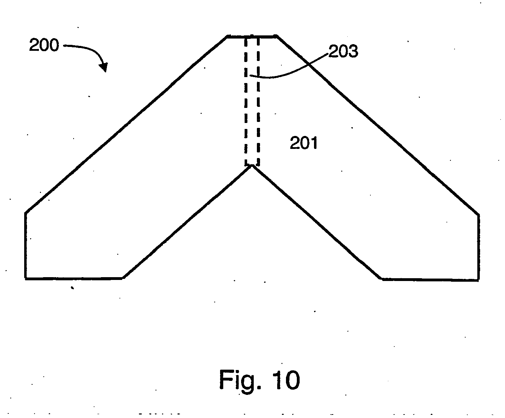

The mold can also be configured to form the gratings on a solid light transmissive substrate coated with one or more layers of materials suitable for three-dimensional object construction. In this embodiment, the mold may be manufactured as a single or double plate mold which contacts the coating and form the grating. The mold can be formed by any technique known in the art. A preferred method for forming the mold is described hereinunder. A schematic illustration of a side view of mold **200** and an inverted shape **202** of one linear grating is provided in Figure 9K. A schematic illustration of a top view of the cavity **201** of mold **200** is provided in Figure 10. Also shown in Figure 10 is an insertion **203** formed within cavity **201,** to allow assembling of element **150** after molding.

Mold **200** is preferably made of metal, *e.g.*, nickel or aluminum, and can comprise one or two surfaces, generally shown at **204** and **206**. Shown in Figure 9K is an exemplified configuration in which surface **204** has the inverted shape of the grating while surface **206** is substantially flat. This embodiment is useful when it is desired to manufacture am optical relay in which all the gratings are formed on one surface of the substrate (say, surface **22,** see Figure 2B). When it is desired to form gratings on both surfaces of the optical relay device (surfaces **22** and **24,** see Figure 1A) both surfaces **204** and **206** of mold **200** include the inverted shape of the gratings. Each of surfaces **204** and **206** may have the desired structure (chevron, crescent, etc.) of the light transmissive substrate to be formed.

The method continues to step **385** in which mold **200** is contacted with a light transmissive material. Preferably, the light transmissive material is characterized by a substantially low birefringence. Step **385** can be executed in more than one way.

In one embodiment, an injection molding technique is employed. In this embodiment, the mold is heated while being closed and the light transmissive material is introduced into the mold by injection. The injection of the light transmissive material is performed such as to substantially fill the mold. Once the material is injected to the mold, a high pressure can be applied between the two surfaces of the mold, so as to enhance the surface relief replication.

In another embodiment, an injection compression molding technique is employed. In this embodiment, the mold is heated and the light transmissive material is injected into the mold before the closure of the mold such that the mold is only partially filled. Once the material is injected to the mold, the mold is closed to its final position so as to shape the material according to the shape of the mold. High pressure can be applied between the two surfaces of the mold, so as to enhance the surface relief replication.

In an additional embodiment, a varying temperature protocol is employed. In this embodiment, the mold is first heated to a temperature to above the glass transition temperature of the material. Above this temperature, non-covalent bonds become weak in comparison to the thermal motion, and the material is capable of plastic deformation without fracture. This procedure reduces the internal stresses and the variations in the refractive index of the formed substrate. The advantage of this embodiment is that the high temperature of the mold facilitates optimal filling of the mold and replication of the nano-structures. Subsequently to the heating of the mold, the material is injected into the mold and the temperature of the mold is reduced to allow solidification of the material.

The light transmissive material is hardened within the cavity of the mold and a substrate having the linear grating(s) thereon is thus formed.

The temperatures of the mold and the injected light transmissive material depend, in principle, on the type and amount of material injected into the mold. For example, when the light transmissive material is cycloolefin copolymer or cycloolefin polymer, the melt temperature of the light transmissive material is from about 200 °C to about 320 °C. For such materials, fixed temperature protocol can be performed at mold temperature from about 90 °C to about 150 °C, and varying temperature protocol can be performed at initial temperature of from about 110 °C to about 180 °C, and a final temperature of from about 90 °C to about 140 °C.

In still another embodiment, the light transmissive material is in the form of a solid substrate having optically flat surfaces, preferably parallel. In this embodiment, step **385** is preferably preceded by a cutting step in which a light transmissive substrate is cut to form the structure described hereinabove. The substrate can be fabricated in any way known in the art or any of the processes described herein. According to the presently preferred embodiment of the invention, one or more surfaces of the substrate are preferably coated prior to the contacting step with one or more layers of materials suitable for three-dimensional object construction, optionally and preferably including a layer of adhesion promotion material located between the substrate and the molded coat layer. When it is desired to include optical element **150** in the light relay device, the building material is coated selectively so as to facilitate later attachment of element **150.** This may be done, for example, by leaving the desired location uncoated, to allow later formation of element **150.**

The coating material may be of various types, including, without limitation a modeling material which may solidify to form a solid layer of material upon curing. For example, the substrate can be coated with a material having a photopolymer component curable by the application of electromagnetic radiation. The coated substrate is then pressed against the mold and is irradiated by the curing radiation to cure the layers. The thickness of the modeling material is preferably a few hundreds of microns and the thickness of the adhesion promotion layer is preferably from a few microns to a few tens of microns.

In various exemplary embodiments of the invention the substrate is coated with a material having a curable component, such as a photoinitiator. In these embodiments, once the coated substrate is pressed against the mold, a curing radiation is applied to cure the layers. The curing radiation can be applied through the substrate, or through the mold if it is made of radiation-transparent material. To enhance adhesion of the modeling material to the substrate material, an adhesion promoter can be applied on the surface(s) of the substrate.

The photoinitiator may initiate polymerization of the transmissive material and/or the adhesion promoter.

The term "photoinitiator", as used herein, refers to a substance which may be chemically activated upon exposure to light, and the chemical activation is directed towards initiating a polymerization process between one or more polymerizable monomers in the material for coating the substrate.

In various exemplary embodiments of the invention the photoinitiator comprises a UV curable component, in which case the curing radiation is a UV radiation having a wavelength ranging from about 100 nm to about 400 nm. For example, the photoinitiator may be activated by UV radiation ranging from approximately 280 nm to approximately 400 nm.

The photoinitiator may be a charge-driven photoinitiator or a free radical-driven photoinitiator, depending on the type of transmissive polymeric materials and/or the adhesion promoter that is used for the substrate coating.

The photoinitiator may form a part of one or more monomers used for the polymer comprising the transmission material, by containing a free radical-driven polymerizable group and/or charge-driven polymerizable group (such as for a cationic ring opening polymerization process). The resulting polymer may therefore contain a UV curable component in the form of special functional groups. Such polymer is then blended with a free radical-driven and/or a charge-driven photoinitiator and processed into the coating layer on the substrate. Upon exposure to the UV radiation, the photoinitiator may produce cations or free radicals, which initiate polymerization of the transmissive polymeric materials and/or the adhesion promoter. For example, in embodiments wherein the transmissive polymeric materials and/or the adhesion promoter include monoacrylate, diacrylates, methacrylate and/or polyacrylate groups, the photoinitiator may be a free radical-driven photoinitiator. In embodiments wherein the transmissive polymeric materials and/or the adhesion promoter include vinyl, cycloolefin, epoxide and/or oxetane groups, a charge-driven photoinitiator may be used. During photolysis, many charge-driven photoinitiators generate free radicals in addition to cations, therefore, a preferred photoinitiator which may be used to initiate polymerization of the transmissive polymeric materials and/or the adhesion promoter, includes a mixture of acrylate or methacrylate groups and vinyl, epoxide, or oxetane groups.

Exemplary free radical-driven photoinitiators include, without limitation: acyloin and derivatives thereof such as benzoin, benzoin methyl ether benzoin ethyl ether, benzoin isopropyl ether, benzoin isobutyl ether, desyl bromide, and $\alpha$-methylbenzoin; diketones, such as benzil and diacetyl; an organic sulfide, such as diphenyl monosulfide, diphenyl disulfide, desyl phenyl sulfide, and tetramethylthiuram monosulfide; a thioxanthone; an S-acyl dithiocarbamate, such as S-benzoyl-N,N-dimethyldithiocarbamate and S-(p-chlorobenzoyl)-N,N-dimethyldithiocarbamate; a phenone, such as acetophenone, $\alpha,\alpha,\alpha$-tribromoacetophenone, o-nitro-$\alpha,\alpha,\alpha$-tribromoacetophenone, benzophenone, and p,p'-tetramethyldiaminobenzophenone; a quinone; a triazole; a sulfonyl halide, such as p-toluenesulfonyl chloride; a phosphorus-containing photoinitiator, such as an acylphosphine oxide; an acrylated amine; 2,2-dimethoxy-2-phenylacetophenone, acetophenone, benzophenone, xanthone, 3-methylacetophenone, 4-chlorobenzophenone, 4,4'-dimethoxybenzophenone, benzoin propyl ether, benzyl dimethyl ketal, N,N,N',N'-tetramethyl-4,4'-diaminobenzophenone, 1-(4-isopropylphenyl)-2-hydroxy-2-methylpropane-1-one, and other thioxanthone compounds; and mixtures thereof.

Exemplary charge-driven photoinitiators include, without limitation: an onium salt, such as a sulfonium salt, an iodonium salt, or mixtures thereof; a bis-diaryliodonium salt, a diaryliodonium salt of sulfonic acid, a triarylsulfonium salt of sulfonic acid, a diaryliodonium salt of boric acid, a diaryliodonium salt of boronic acid, a triarylsulfonium salt of boric acid, a triarylsulfonium salt of boronic acid, or mixtures thereof; diaryliodonium hexafluoroantimonate, aryl sulfonium hexafluorophosphate, aryl sulfonium hexafluoroantimonate, bis(dodecyl phenyl) iodonium hexafluoroarsenate, tolyl-cumyliodonium tetrakis(pentafluorophenyl) borate, bis(dodecylphenyl) iodonium hexafluoroantimonate, dialkylphenyl iodonium hexafluoroantimonate, diaryliodonium salts of perfluoroalkylsulfonic acids, such as diaryliodonium salts of perfluorobutanesulfonic acid, perfluoroethanesulfonic acid, perfluorooctanesulfonic acid, and trifluoromethane sulfonic acid; diaryliodonium salts of aryl sulfonic acids such as diaryliodonium salts of para-toluene sulfonic acid, dodecylbenzene sulfonic acid, benzene sulfonic acid, and 3-nitrobenzene sulfonic acid; triarylsulfonium salts of perfluoroalkylsulfonic acids such as triarylsulfonium salts of perfluorobutanesulfonic acid, perfluoroethanesulfonic acid, perfluorooctanesulfonic acid, and trifluoromethane sulfonic acid; triarylsulfonium salts of aryl sulfonic acids such as triarylsulfonium salts of para-toluene sulfonic acid, dodecylbenzene sulfonic acid, benzene sulfonic acid, and 3-nitrobenzene-sulfonic-acid; diaryliodonium salts of perhaloarylboronic acids, triarylsulfonium salts of perhaloarylboronic acid, and mixtures thereof.

The phrase "adhesion promoter" as used herein refers to a substance which is added to the coating material so as to enhance the adhesion of the coating material to the substrate.

Typically the adhesion promoter comprises one or more types of polymerizable monomers having two or more polymerizable functional groups, which upon polymerization can enhance the adhesion of the coating layer, for example by crosslinking the coating material with the substrate. Additional attributes which the adhesion promoter may bestow on the coating layer include physical properties such as abrasion resistance, backmark retention, proper sliding friction and others. Preferred adhesion promoters, according to embodiments of the present invention include, without limitation, water soluble polymers, hydrophilic colloids or water insoluble polymers, latex or dispersions; styrene and derivatives thereof, acrylic acid or methacrylic acid and derivatives thereof, olefins, chlorinated olefins, cycloolefins, (meth)acrylonitriles, itaconic acid and derivatives thereof, maleic acid and derivatives thereof, vinyl halides, vinylidene halides, vinyl monomer having a primary amine addition salt, vinyl monomer containing an aminostyrene addition salt, polyurethanes and polyesters and others; and mixtures thereof. Also included are adhesion promoting polymers such as disclosed in, for example, U.S. Patent Nos. 6,171,769 and 6,077,656.

When using an adhesion promoter, the layer coating the substrate is subsequently crosslinked by exposure to UV radiation and then may be further set thermally.

In an additional embodiment, one or more surfaces of the substrates are coated with one or more layers of a soft thermally settable material. The mold is heated and the coated substrate is then pressed against the mold to thermally set (harden) the thermally settable material. To enhance adhesion, an adhesion promoter can be applied on the surface (s) of the substrate.

Thermally settable polymers are known in the art and found, *e.g.*, in U.S. Patent Nos. 6,197,486, 6,197,486, 6,207,361, 6,436,619, 6,465,140 and 6,566,033. Suitable classes of thermally settable polymers according to the present invention include polymers of alpha-beta unsaturated monomers, polyesters, polyamides, polycarbonates, cellulosic esters, polyvinyl resins, polysulfonamides, polyethers, polyimides, polyurethanes, polyphenylenesulfides, polytetrafluoroethylene, polyacetals, polysulfonates, polyester ionomers, and polyolefin ionomers. Interpolymers and/or mixtures thereof. Exemplary polymers of alpha-beta unsaturated monomers include polymers of ethylene, propylene, hexene, butene, octene, vinylalcohol, acrylonitrile, vinylidene halide, salts of acrylic acid, salts of methacrylic acid, tetrafluoroethylene, chlorotrifluoroethylene, vinyl chloride, and styrene.

In various exemplary embodiments of the invention the method continues to step **390** in which the substrate is disengaged from the mold. Figure 9L schematically illustrates the substrate **14** and an exemplified linear grating **226** formed thereon, after the disengagement of the substrate from the mold.

The method ends at step **400.**

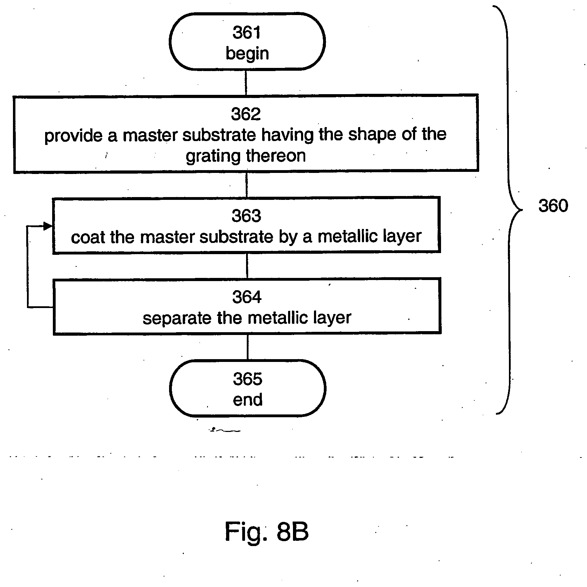

Reference is now made to Figure 8B which is a flowchart diagram further detailing a method suitable for forming the mold (step **360** in Figure 8A), according to various exemplary embodiments of the present invention. The method begins at step **361** and continues to step **362** in which a master substrate **208** having the shape **210** of the gratings form thereon is provided (see Figure 9I). A preferred method for forming such master substrate is described hereinunder.

The method continues to step 363 in which master substrate 208 is coated by one or more metallic layers 212 (see Figure 9J). The metallic layers can be made of any metal suitable for forming molds, such as, but not limited to, aluminum, nickel or any other suitable metal alloy as known in the art. The metallic layer(s) can be applied by any technique known in the art, including, without limitation, physical vapor deposition (PVD), chemical vapor deposition (CVD), atomic layer deposition (ALD), electrochemical plating (ECP) or combination thereof. In the case of more than one metallic layers, the first layer can be deposited formed by PVD, ALD and the other layers can be electroplated on the first layer.

Any of the above coating techniques are well known to those skilled in the art of coating and thin film deposition. In CVD, for example, the metallic layers are formed by placing the master substrate in a mixture of gases. Under certain pressure and temperature conditions, the molecules contained in the gases are deposited on the surfaces of the master substrate as a result of thermal reactions to form the metallic layer thereupon. CVD process can be done in a conventional CVD reactor such as, for example, the CVD reactor disclosed in U.S. Patent Nos. 5,503,875, 5,441,570, and 6,983,620.

In ALD, the metallic layers are formed on the master substrate by chemically sorbing one or more precursors which comprise the desired metal and a ligand onto the master substrate surface to form a monolayer of precursors that is approximately one molecule thick. A second precursor may be introduced to chemically react with the first chemisorbed layer to grow a thin film on the master substrate surface. After sufficient process cycles of monolayer formation has occurred, or alternatively with the formation of the monolayers, the monolayers can be contacted with a reaction gas to form the metallic layer on the surface of the master substrate. ALD process can be done in any ALD reactor such as, for example, the ALD reactor disclosed in U.S. Patent Nos. 6,787,463, 6,808,978, 6,869,876 and 7,037,574.

In PVD, the metallic layers are deposited on the master substrate by physical, as opposed to chemical, means. Typically, the deposition of the metallic layer is by sputtering, in which ions are created by collisions between gas atoms and electrons in a glow discharge. The ions are accelerated and directed to a cathode of sputter target material by an electromagnetic field causing atoms of the sputter target material to be ejected from the cathode surface, thereby forming sputter material plasma. By contacting the master substrate with the plasma, the metallic layers are deposited on the surface of the master substrate. PVD process can be done in any conventional magnetron, such as the magnetron disclosed in U.S. Patent Nos. 4,441,974, 4,931,158, 5,693,197 and 6,570,172.

In ECP, a seed layer is first formed over the surface of the master substrate and subsequently the master substrate is exposed to an electrolyte solution while an electrical bias is simultaneously applied between the master substrate and an anode positioned within the electrolyte solution. The electrolyte solution is generally rich in ions to be plated onto the surface of the master substrate. Therefore, the application of the electrical bias causes the ions to be urged out of the electrolyte solution and to be plated onto the seed layer. ECP process can be done in any way known in the art such as, for example, the techniques disclosed in U.S. Patent Nos. 6,492,269, 6,638,409, 6,855,037 and 6,939,206.

The method continues to step **364** in which metallic layer or layers **212** are separated from the master substrate **208** to form one surface (*e.g.*, surface **204**) of mold **200.** In the embodiment in which both surfaces of the mold are patterned according to the inverted shape of the linear grating, the method loops back to step **363** to fabricate the other surface.

The method for forming the mold ends at step **365.**

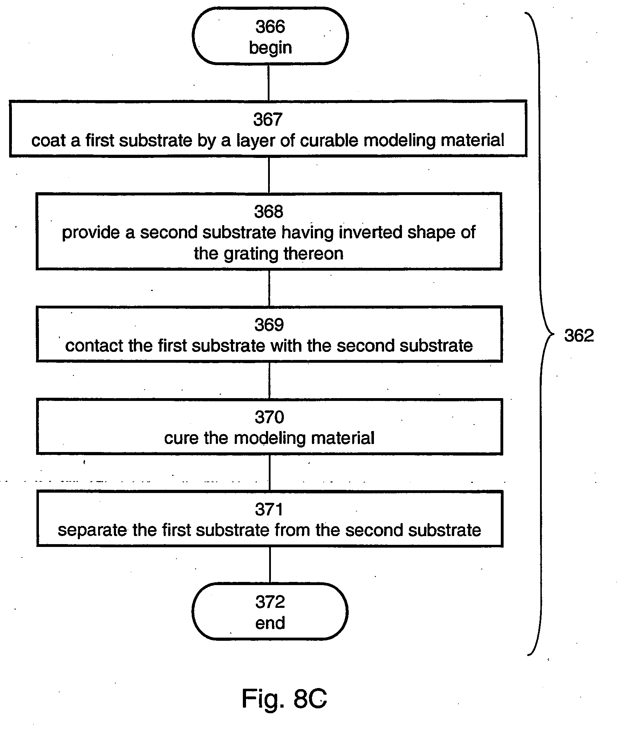

Reference is now made to Figure 8C which is a flowchart diagram of a method for forming a master substrate, according to various exemplary embodiments of the present invention. The master substrate can be used for forming the mold as described above.

The method begins at step **366** and continues to step **367** in which a first substrate **214** (see Figure 9G) is coated by one or more layers **216** of a curable modeling material. First substrate is preferably made of a hard material, such as, but not limited to, glass, fused silica, hard plastic, metal and the like. The method continues to step **368** in which a second substrate **218** having the inverted shape **202** of the linear grating is provided. Second substrate **218** is also made of hard material, such as, but not limited to, fused silica, quartz, borosilicate and the like. Second substrate **218** can be fabricated using any technique known in the art for forming either holographic or ruled diffraction gratings.

Thus, substrate **218** can be manufactured classically with the use of a ruling engine, *e.g.*, by burnishing grooves with a diamond stylus in substrate 218, or holographically through a combination of photolithography and etching. A preferred method for forming the second substrate by lithography followed by etching is described hereinunder.

The curable modeling material is capable of solidifying to form a solid layer of material upon curing, as described above. The curable modeling material serves for hosting the shape **210** of the gratings, and is preferably selected to facilitate the aforementioned separation of the metallic layer from the master substrate. In this respect, the hardness of the modeling material in its cured state is preferably lower than the hardness of the metallic layer(s) **212**. Additionally, the hardness of the modeling material in its cured state is preferably lower than the hardness of second substrate **218**. In various exemplary embodiments of the invention the curable modeling material comprises a UV curable component.

The method continues to step **369** in which first substrate **214** is contacted with second substrate **218** (see Figure 9H). The method continues to step **370** in which the modeling material is cured. The curing procedure depends on the type of modeling material. For example, when the material is curable by certain electromagnetic radiation (*e.g.*, UV radiation), the curing is by applying the electromagnetic radiation. When the material is curable by thermal treatment, the curing is by thermal treatment, *e.g.*, heating.

The method continues to step **371** in which first substrate **214** is separated from second substrate **218** to expose the cured layer on first substrate **214,** thereby forming the master substrate **208** having the shape **210** of the gratings (see Figure 9I).

The method for forming the master substrate ends at step **372.**

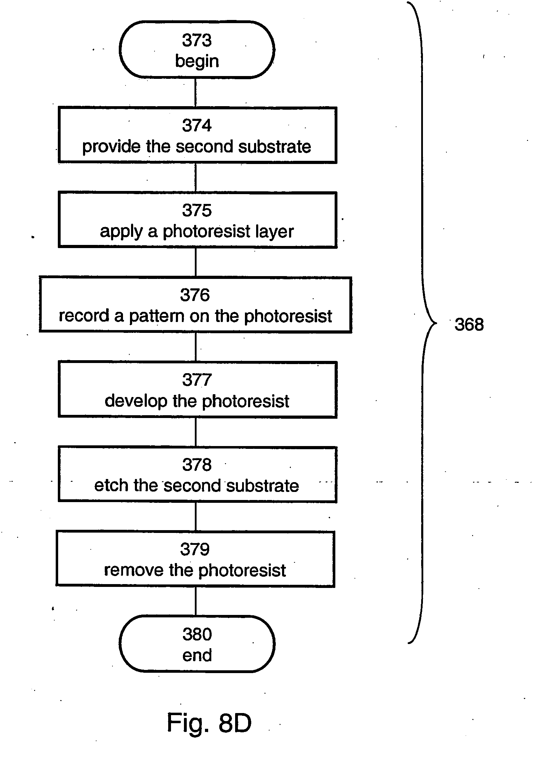

Reference is now made to Figure 8D which is a flowchart diagram of a method for forming a substrate having the inverted shape of the linear grating, according to various exemplary embodiments of the present invention. This method is useful for providing the second substrate **218** (see step **368** in Figure 8C) which is employed in the preferred manufacturing process of master substrate **208.**

The method begins at step **373** and continues to step **374** in which the second substrate **218,** which, as stated is preferably made of a hard material, is provided (see Figure 9A). The method continues to step **375** in which a layer **220** of a photoresist material is applied on substrate **218** (see Figure 9B).

A photoresist material is a material whose intermolecular bonds are either strengthened or weakened by exposure to certain type of radiation, such as electromagnetic radiation or particle (*e.g.*, electron) beam.

The photoresist material can be applied using any known procedure, such as, but not limited to, coating, printing and lamination. Representative examples of coating procedures include, without limitation, dip coating, roller coating, spray coating, reverse roll coating, spinning or brushing. Representative examples of printing procedures include, without limitation curtain printing or screen printing. The photoresist material used in accordance with the present embodiments may be any material used as a photoresist in the manufacture of diffraction gratings.

The photoresist material can be an organic or an inorganic photoresist material in a liquid or dry form. The photoresist material can be a positive photoresist material or a negative photoresist material. A positive photoresist material is a material that becomes, as a result of the exposure step that follows, non-resistant to the subsequent development step as described hereinbelow. Conversely, a negative photoresist material is a material that becomes, as a result of the exposure step that follows, resistant to the development step that follows.

The method continues to step **376** in which a pattern **222** is recorded on layer **220** (see Figure 9C). The pattern can correspond to the shape of the linear grating or an inverted shape thereof, depending whether the photoresist material is a negative photoresist material or a positive photoresist material. Since it is desired to form an inverted shape of the grating on the surface of substrate **218,** when a positive photoresist is used, the standing wave pattern corresponds to the shape of the linear grating, and when a negative photoresist is used, the pattern corresponds to the inverted shape of the grating.

The pattern can be recorded by means of optical interference, *e.g.*, by forming a standing wave interference pattern of two plane optical waves on layer **220.** Alternatively, the pattern can be recorded by means of a scanning electron beam.

Representative examples of photoresist materials suitable for electromagnetic radiation include, without limitation, Microposit S1805, commercially available from Shipley Corporation, USA. For such photoresist, the preferred recording is by electromagnetic radiation at a wavelength of 365 nm. Representative examples of photoresist materials suitable for electron beam include, without limitation, polymethyl methacrylate or derivatives thereof.

The method continues to step **377** in which the photoresist is developed thereby forming a mask pattern **224** of developed photoresist on the surface of substrate **218** (see Figure 9D). The method proceeds to step **378** in which substrate **218** is etched, to form ridges and grooves according to the inverted shape **202** of the grating (see Figure 9E).

The etching process can be any wet or dry etching process known in the art. The wet etching process can include isotropic etchants or anisotropic etchants. The dry etching process can be purely chemical, purely physical or a combination of chemical and physical etching. Suitable dry etching process thus includes, without limitation, chemical dry etching, ion beam etching, reactive ion etching (also known as chemical-physical etching) and laser induced etching.

Once the inverted shape **202** of the grating is formed, the method optionally and preferably continues to step **379** in which mask pattern **224** is removed (see Figure 9F).

The method for forming substrate **218** ends at step **380.**

Additional objects, advantages and novel features of the present invention will become apparent to one ordinarily skilled in the art upon examination of the following examples, which are not intended to be limiting. Additionally, each of the various embodiments and aspects of the present invention as delineated hereinabove and as claimed in the claims section below finds experimental support in the following examples.

**EXAMPLES**

Reference is now made to the following examples, which together with the above descriptions illustrate the invention in a non limiting fashion.

*EXAMPLE 1*

*Diffraction of Red Light*

Following is a non-limiting example in which planar dimension calculations are performed in accordance with the teachings of the preferred embodiments of the invention for the diffraction of red light.

The present calculations are for 509 nm period gratings formed in a light transmissive substrate having index of refraction of 1.522, thickness of 2 mm, and apex angle of $\delta = 62°$. As a representative example for red light, a wavelength of 615 nm was assumed.

With the above values of the grating period, index of refraction and wavelength a horizontal field-of-view $\Omega_y$ of [-12.0°, +12.0°] and a transverse field-of-view $\Omega_x$ of [-9.0°, +9.0°] can be achieved. The overall (diagonal) field-of-view $\Omega$ is calculated using Equation 5 to obtain $\Omega$ = [-15°, +15°].

For $\Delta z$ = 25 mm, the minimal dimensions of the output optical element(s) are (see Equation 6) $L_{O, min}$ =10.6 mm and $W_{O, min}$ = 7.9 mm. For $L_{EB}$ = 4 mm, $W_{EB}$ = 1 mm and $O_p$ = 3 mm, the dimensions of the output optical element(s) are (see Equation 7) $L_O$ = 17.6 mm and $W_O$ = 11.9 mm.

Using the thickness of the substrate and the above values of $\Omega_y$ one obtains a hop-length of $h$ = 3.5 mm which is then used to set the length $L_I$ of the input element to be from about 3.5 mm to about 10.5 mm.

The above values of $\Omega_x$ and $\Omega_y$ correspond to an outermost propagation angle (as projected on the $\xi$-$\eta$ plane and measured from the $\eta$ direction) of -12° and +10°. Thus, in accordance with preferred embodiments of the present invention, the value of the angular parameters are $\gamma_1$ = 90° - (62° - 12°) = 40°, and $\gamma_2$ = 90° - (62° + 10°) = 18°.

For $\Delta y$ = 19.2 mm, $L_1$ = 4 mm, and the above values of $\delta$, $\gamma_1$, $\gamma_2$, $W_O$ and $L_O$, the width $W_I$ of the input optical element is (see Equation 8) is $W_I$ = 35.2 mm.

## EXAMPLE 2

### *Diffraction of Blue Light*

Following is a non-limiting example in which planar dimension calculations are performed in accordance with the teachings of the preferred embodiments of the invention for the diffraction of blue light.

The present calculations are for 370 nm period gratings formed in a light transmissive substrate having index of refraction of 1.529, thickness of 1.8 mm, and apex angle of $\delta$ = 60°. As a representative example for blue light, a wavelength of 465 nm was assumed.

With the above values of the grating period, index of refraction and wavelength a horizontal field-of-view $\Omega_y$ of [-12°, +12°] and a transverse field-of-view $\Omega_x$ of [-9°, +9°] can be achieved. The overall (diagonal) field-of-view $\Omega$ is calculated using Equation 5 to obtain $\Omega$ = [-15°, +15°].

For $\Delta_z$ = 20 mm, the minimal dimensions of the output optical element(s) are $L_{O, min}$ = 7.8 mm and $W_{O, min}$ = 5.8 mm. For $L_{EB}$ = 5 mm, $W_{EB}$ = 2 mm and $O_p$ = 3 mm the dimensions of the output optical element(s) are $L_O$ =15.8 mm and $W_O$ =10.8 mm.

Using the thickness of the substrate and the above values of $\Omega_y$ one obtains a hop-length of h = 3.1 mm, which is then used to set the length $L_I$ of the input element to be from about 3 mm to about 10 mm.

The above values of $\Omega_x$ and $\Omega_y$ correspond to an outermost propagation angle (as projected on the $\xi$-$\eta$ plane and measured from the $\eta$ direction) of -11.6° and +9.9°. Thus, in accordance with preferred embodiments of the present invention, the value of the angular parameters are $\gamma_1$ = 90° - (60 - 11.6) = 41.6°, and $\gamma_2$ = 90° - (60° + 9.9°) = 20.1°.

For $\Delta y$ = 20.1 mm, $L_I$ = 4 mm, and the above values of $\delta$, $\gamma_1$, $\gamma_2$, $W_O$ and $L_O$, the width $W_I$ is 33.9 mm.

## EXAMPLE 3

### *A Detailed Manufacturing Process*

Figures 9A-L illustrate an exemplified embodiment for manufacturing the optical relay device according to the teachings of the present invention.

Figure 9A schematically illustrates second substrate **218,** which is preferably used for manufacturing the master substrate as further detailed hereinabove.

Figure 9B schematically illustrates second substrate **218,** once layer **220** of photoresist material is applied thereon.

Figure 9C schematically illustrates second substrate **218,** once pattern **222** is recorded on layer **220**

Figure 9D schematically illustrates second substrate **218,** once the photoresist is developed to form mask pattern **224** on layer the surface of substrate **218.**

Figure 9E schematically illustrates substrate **218** following the etching process which forms the inverted shape **202** of the grating on substrate **218.**

Figure 9F schematically illustrates substrate **218** following once mask pattern **224** is removed.

Figure 9G schematically illustrates first substrate **214,** which is also used for manufacturing the master substrate as further detailed hereinabove. Substrate **214** is coated by one or more layers **216** of a curable modeling material.

Figure 9H schematically illustrates the contact between first substrate **214** and second substrate **218.** As shown, the modeling material receives the shape of the gratings.

Figure 9I illustrate master substrate **208,** which is formed after the separation of first substrate **214** from second substrate **218.**

Figure 9J illustrate master substrate **208** once one or more metallic layers **212** are applied thereon. The metallic layers serve as a surface of the mold as further detailed hereinabove.

Figure 9K schematically illustrates mold **200** with a first surface **204** and a second surface **206**. First surface is formed by separating metallic layer **212** from master substrate **208.** In the present example, second surface **206** is flat, but, as stated, it can be manufactured similarly to surface **204** to include inverted shape of one or more gratings. Figure 9L schematically illustrates substrate **14** and grating **226** formed using mold **200.**

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims. All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention.

**Claims**

1. An optical relay device (10) for a binocular device which can be held or mounted in front of the eyes of a user, comprising:

   a planar light-transmissive substrate (14) shaped as an open planar structure having a right section (142), a left section (143) and an apex section (141) connecting said right and said left sections, wherein the left and right sections are non-parallel, such that said right and said left sections are separated by an air gap (144);
   at least two input optical elements (13a, 13b) located at said apex section;
   a right output optical element (19) located at said right section; and
   a left output optical element (15) located at said left section;
   said substrate and said optical elements being designed and constructed such that light is redirected by said input optical elements to propagate via total internal reflection within at least one of said left and said right sections in the direction of at least one of said left and said right output optical elements, and is redirected out of said light-transmissive substrate by said at least one of said left and said right output optical elements.

2. A system for generating and transmitting an image, comprising the optical relay device of claim 1, and an image generating system for providing the optical relay device with collimated light constituting the image.

3. The device of claim 1, wherein each of said optical elements comprises a linear grating.

4. The device of claim 1, wherein the device further comprises an additional optical element positioned at said apex section and configured for reducing optical cross-talks between said at least two input optical elements.

5. A method of manufacturing an optical relay device according to claim 1, comprising:

   forming a mold configured to receive a light transmissive material and to shape said material as an open planar structure having a right section, a left section and an apex section connecting said right and said left sections such that said right and said left sections are separated by an air gap, said mold being patterned according to inverted shapes of:

   (i) at least two central input optical elements being linear gratings located at said apex section and **characterized by** periodic linear structures having similar periods and different orientations,
   (ii) a right output optical element being a linear grating located at said right section, and
   (iii) a left output optical element being a linear grating located at said left section; and

   contacting said mold with said light transmissive material, so as to provide a light-transmissive substrate shaped as said structure and formed with said at least two central linear gratings, said right linear grating and said left linear grating.

**6.** The method of claim 5, wherein said mold is configured to form an additional optical element at said apex section, said additional optical element being configured for reducing optical cross-talks between said at least two central linear gratings.

**7.** A method of manufacturing an optical relay device according to claim 1, comprising:

cutting a light transmissive substrate to form an open planar structure having a right section, a left section and an apex section connecting said right and said left sections such that said right and said left sections are separated by an air gap;

forming a mold patterned according to an inverted shape of at least one linear grating; and

contacting said at least one mold with said structure formed from said light transmissive substrate, so as to form

(i) at least two central input optical elements being linear gratings located at said apex section and **characterized by** periodic linear structures having similar periods and different orientations,

(ii) a right output optical element being a linear grating located at said right section, and

(iii) a left output optical element being a linear grating located at said left section.

**8.** The method of claim 7, further comprising attaching an additional optical element to said light transmissive substrate at said apex section, said additional optical element being configured for reducing optical cross-talks between said at least two central linear gratings.

**9.** The method of claim 5 or 7, wherein said at least two central linear gratings are designed and constructed as input optical elements capable of redirecting light rays striking said light transmissive substrate into said light transmissive substrate such that at least one light ray of said light rays propagates within said light-transmissive substrate via total internal reflection.

**10.** The device, system or method of claim 4, 6 or 8, wherein said additional optical element comprises a light diffuser.

**11.** The device or system of claim 3, wherein said at least two input linear gratings comprises a right input linear grating and a left input linear grating, and wherein said right input linear grating and said left input linear grating are **characterized by** periodic linear structures having similar periods and different orientations.

**12.** The device, system or method of claim 3, 5 or 7, wherein said at least two input linear gratings comprise a right input linear grating, and wherein said right input linear grating and said right output linear grating are **characterized by** periodic linear structures having similar periods and similar orientations.

**13.** The device or system of claim 1 or 2, wherein said left output optical element is designed and constructed for redirecting light striking said light transmissive substrate at any angle within a first partial field-or-view out of said light-transmissive substrate; and said right output optical element is designed and constructed for redirecting light striking said light transmissive substrate at any angle within a second partial field-of-view out of said light-transmissive substrate.

**14.** The device, system or method of claim 13, wherein said left output optical element is **characterized by** planar dimensions selected such that at least a portion of at least one outermost light ray within said first partial field-of-view is directed to a first two-dimensional region, and wherein said right output optical element is **characterized by** planar dimensions selected such that at least a portion of at least one outermost light ray within said second partial field-of-view is directed to a second two-dimensional region, said first and said second two-dimensional regions being at a predetermined distance from said light transmissive substrate.

**15.** The device, system or method of claim 14, wherein a width along a vertical axis characterizing the planar dimensions of said right and said left output optical elements is smaller than a width along said vertical axis characterizing the planar dimensions of said input optical element.

**Patentansprüche**

**1.** Optische Relaisvorrichtung (10) für eine Binokularvorrichtung, die vor den Augen eines Benutzers gehalten oder angebracht werden kann, umfassend:

ein ebenflächiges lichtdurchlässiges Substrat (14), das als offener ebenflächige Aufbau mit einem rechten Abschnitt (142), einem linken Abschnitt (143) und einem Scheitelabschnitt (141), der den rechten und den linken Abschnitt verbindet, geformt ist, wobei der linke und der rechte Abschnitt nicht parallel sind, so dass der rechte und der linke Abschnitt durch einen Luftspalt (144) getrennt sind;
zumindest zwei optische Eingangselemente (13a, 13b), die sich am Scheitelabschnitt befinden;
ein rechtes optisches Ausgangselement (19), das sich am rechten Abschnitt befindet; und
ein linkes optisches Ausgangselement (15), das sich am linken Abschnitt befindet;

wobei das Substrat und die optischen Elemente so gestaltet und aufgebaut sind, dass Licht durch die optischen Eingangselemente so abgelenkt wird, dass es sich über eine totale innere Reflexion in zumindest einem aus dem linken und dem rechten Abschnitt in die Richtung zumindest eines aus dem linken und dem rechten optischen Ausgangselement fortpflanzt, und durch zumindest eines aus dem linken und dem rechten optischen Ausgangselement aus dem lichtdurchlässigen Substrat abgelenkt wird.

2. System zum Erzeugen und Übertragen eines Bilds, umfassend die optische Relaisvorrichtung nach Anspruch 1 und ein Bilderzeugungssystem, das der optischen Relaisvorrichtüng gebündeltes Licht, das das Bild bildet, bereitstellt.

3. Vorrichtung nach Anspruch 1, wobei jedes der optischen Elemente ein lineares Gitter umfasst.

4. Vorrichtung nach Anspruch 1, wobei die Vorrichtung ferner ein zusätzliches optisches Element umfasst, das am Scheitelabschnitt positioniert ist und dazu gestaltet ist, optisches Quersprechen zwischen den zumindest zwei optischen Eingangselementen zu verringern.

5. Verfahren zur Herstellung einer optischen Relaisvorrichtung nach Anspruch 1, umfassend:

Bilden einer Form, die dazu gestaltet ist, ein lichtdurchlässiges Material aufzunehmen und dieses Material als einen offenen ebenflächigen Aufbau mit einem rechten Abschnitt, einem linken Abschnitt und einem Scheitelabschnitt, der den rechten und den linken Abschnitt so verbindet, dass der rechte und der linke Abschnitt durch einen Luftspalt getrennt sind, zu formen, wobei die Form gemäß umgekehrten Formen von

(i) zumindest zwei mittleren optischen Eingangselementen, die lineare Gitter sind, welche sich am Scheitelabschnitt befinden und durch periodische lineare Strukturen mit ähnlichen Perioden und unterschiedlichen Ausrichtungen **gekennzeichnet** sind;
(ii) einem rechten optischen Ausgangselement, das ein lineares Gitter ist, welches sich am rechten Abschnitt befindet, und
(iii) einem linken optischen Ausgangselement, das ein lineares Gitter ist, welches sich am linken Abschnitt befindet,

gemustert ist; und
In-Kontakt-bringen der Form mit dem lichtdurchlässigen Material, um ein lichtdurchlässiges Substrat bereitzustellen, das wie dieser Aufbau geformt ist und mit den zumindest zwei mittleren linearen Gittern, dem rechten linearen Gitter und dem linken linearen Gitter ausgeführt ist.

6. Verfahren nach Anspruch 5, wobei die Form dazu gestaltet ist, am Scheitelabschnitt ein zusätzliches optisches Element zu bilden, wobei das zusätzliche optische Element dazu gestaltet ist, optisches Quersprechen zwischen den zumindest zwei mittleren linearen Gittern zu verringern.

7. Verfahren zur Herstellung einer optischen Relaisvorrichtung nach Anspruch 1, umfassend:

Schneiden eines lichtdurchlässigen Substrats, um einen offenen ebenflächen Aufbau mit einem rechten Abschnitt, einem linken Abschnitt und einem Scheitelabschnitt, der den rechten und den linken Abschnitt so verbindet, dass der rechte und der linke Abschnitt durch einen Luftspalt getrennt sind, zu formen;
Bilden einer Form, die gemäß einer umgekehrten Form zumindest eines linearen Gitters gemustert ist; und
In-Kontakt-bringen der zumindest einen Form mit dem Aufbau, der aus dem lichtdurchlässigen Substrat gebildet wurde, um

(i) zumindest zwei mittlere optische Eingangselemente, die lineare Gitter sind, welche sich am Scheitelabschnitt befinden und durch periodische lineare Strukturen mit ähnlichen Perioden und unterschiedlichen Ausrichtungen **gekennzeichnet** sind;

(ii) ein rechtes optisches Ausgangselement, das ein lineares Gitter ist, welches sich am rechten Abschnitt befindet, und

(iii) ein linkes optisches Ausgangselement, das ein lineares Gitter ist, welches sich am linken Abschnitt befindet,

zu bilden.

8. Verfahren nach Anspruch 7, ferner umfassend das Anbringen eines zusätzlichen optischen Elements am Scheitelabschnitt an dem lichtdurchlässigen Substrat, wobei das zusätzliche optische Element dazu gestaltet ist, optisches Quersprechen zwischen den zumindest zwei mittleren linearen Gittern zu verringern.

9. Verfahren nach Anspruch 5 oder 7, wobei die zumindest zwei mittleren linearen Gitter als optische Eingangselemente gestaltet und aufgebaut sind, die fähig sind, Lichtstrahlen, welche auf das lichtdurchlässige Substrat treffen, so in das lichtdurchlässige Substrat abzulenken, dass sich zumindest ein Lichtstrahl der Lichtstrahlen über eine totale innere Reflexion im lichtdurchlässigen Substrat fortpflanzt.

10. Vorrichtung, System oder Verfahren nach Anspruch 4, 6 oder 8, wobei das zusätzliche optische Element einen Lichtdiffusor umfasst.

11. Vorrichtung oder System nach Anspruch 3, wobei die zumindest zwei linearen Eingangsgitter ein rechtes lineares Eingangsgitter und ein linkes lineares Eingangsgitter umfassen, und wobei das rechte lineare Eingangsgitter und das linke lineare Eingangsgitter durch periodische lineare Strukturen mit ähnlichen Perioden und unterschiedlichen Ausrichtungen **gekennzeichnet** sind.

12. Vorrichtung, System oder Verfahren nach Anspruch 3, 5 oder 7, wobei die zumindest zwei linearen Eingangsgitter ein rechtes lineares Eingangsgitter umfassen, und wobei das rechte lineare Eingangsgitter und das rechte lineare Ausgangsgitter durch periodische lineare Strukturen mit ähnlichen Perioden und unterschiedlichen Ausrichtungen **gekennzeichnet** sind.

13. Vorrichtung oder System nach Anspruch 1 oder 2, wobei das linke optische Ausgangselement dazu gestaltet und aufgebaut ist, Licht, das in jedem beliebigen Winkel innerhalb eines ersten Teilsichtfelds auf das lichtdurchlässige Substrat trifft, aus dem lichtdurchlässigen Substrat abzulenken; und das rechte optische Ausgangselement dazu gestaltet und aufgebaut ist, Licht, das in jedem beliebigen Winkel innerhalb eines zweiten Teilsichtfelds auf das lichtdurchlässige Substrat trifft, aus dem lichtdurchlässigen Substrat abzulenken.

14. Vorrichtung, System oder Verfahren nach Anspruch 13, wobei das linke optische Ausgangselement durch ebenflächige Ausdehnungen **gekennzeichnet** ist, die so gewählt sind, dass zumindest ein Teil von zumindest einem äußersten Lichtstrahl innerhalb des ersten Teilsichtfelds zu einem ersten zweidimensionalen Bereich gerichtet wird, und wobei das rechte optische Ausgangselement durch ebenflächige Ausdehnungen **gekennzeichnet** ist, die so gewählt sind, dass zumindest ein Teil von zumindest einem äußersten Lichtstrahl innerhalb des zweiten Teilsichtfelds zu einem zweiten zweidimensionalen Bereich gerichtet wird, wobei sich der erste und der zweite zweidimensionale Bereich in einem vorbestimmten Abstand vom lichtdurchlässigen Substrat befinden.

15. Vorrichtung, System oder Verfahren nach Anspruch 14, wobei eine Breite entlang einer senkrechten Achse, die die ebenflächigen Ausdehnungen des rechten und des linken optischen Ausgangselements kennzeichnet, kleiner als eine Breite entlang der senkrechten Achse ist, die die ebenflächigen Ausdehnungen des optischen Eingangselements kennzeichnet.

**Revendications**

1. Dispositif relais optique (10) destiné à un dispositif binoculaire apte à être tenu ou monté à hauteur des yeux d'un utilisateur, comprenant les éléments suivants :

un substrat planaire transmetteur de lumière (14), conçu comme une structure planaire ouverte possédant une section de droite (142), une section de gauche (143) et une section de sommet (141) reliant lesdites sections de droite et de gauche, dans lequel les sections de droite et de gauche ne sont pas parallèles, si bien que lesdites sections de droite et de gauche sont séparées par un espace d'air (144) ;

au moins deux éléments optiques entrée (13a, 13b) situés dans ladite section de sommet ;

un élément optique sortie de droite (19) situé dans ladite section de droite ; et

un élément optique sortie de gauche (15) situé dans ladite section de gauche ;

ledit substrat et lesdits éléments optiques étant conçus et construits de telle manière que la lumière est redirigée par lesdits élément optiques entrée afin d'être propagée, par le biais d'une réflexion interne totale, dans au moins l'une parmi lesdites sections de droite ou de gauche, dans la direction d'au moins l'un parmi lesdits éléments optiques sortie de droite et de gauche, puis est redirigée à l'extérieur dudit substrat transmetteur de lumière par au moins l'un parmi lesdits éléments optiques sortie de gauche et de droite.

2. Système destiné à générer et à transmettre une image, comprenant le dispositif relais optique selon la revendication 1, ainsi qu'un système de génération d'images permettant d'alimenter le dispositif relais optique en lumière collimatée constituant l'image.

3. Dispositif de la revendication 1, dans lequel chacun desdits éléments optiques comprend un réseau linéaire.

4. Dispositif selon la revendication 1, comprenant en outre un élément optique supplémentaire situé dans ladite section de sommet et configuré pour réduire les diaphonies optiques entre lesdits au moins deux éléments optiques entrée.

5. Méthode de fabrication pour un dispositif relais optique selon la revendication 1, comprenant les étapes suivantes :

formation d'un moule conçu pour recevoir un matériau transmetteur de lumière et pour former ledit matériau comme une structure planaire ouverte possédant une section de droite, une section de gauche et une section de sommet reliant lesdites sections de droite et de gauche, de telle manière que lesdites sections de droite et de gauche sont séparées par un espace d'air, ledit moule étant configuré selon les formes inversées de :

(i) au moins deux éléments optiques entrée centraux étant des réseaux linéaires, situés dans ladite section de sommet et **caractérisés par** des structures linéaires périodiques présentant des périodes similaires et des orientations différentes,

(ii) un élément optique sortie de droite étant un réseau linéaire situé dans ladite section de droite, et

(iii) un élément optique sortie de gauche étant un réseau linéaire situé dans ladite section de gauche ; et

mise en contact du moule avec ledit matériau transmetteur de lumière, de manière à fournir un substrat transmetteur de lumière formé comme ladite structure et conçu avec lesdits au moins deux réseaux linéaires centraux, ledit réseau linéaire de droite et ledit réseau linéaire de gauche.

6. Méthode selon la revendication 5, dans laquelle ledit moule est configuré de manière à former un élément optique supplémentaire dans ladite section de sommet, ledit élément optique supplémentaire étant configuré pour réduire les diaphonies optiques entre lesdits au moins deux réseaux linéaires centraux.

7. Méthode de fabrication d'un dispositif relais optique selon la revendication 1, comprenant les étapes suivantes :

découpage d'un substrat transmetteur de lumière pour former une structure planaire ouverte possédant une section de droite, une section de gauche et une section de sommet reliant lesdites sections de droite et de gauche, de telle manière que lesdites sections de droite et de gauche sont séparées par un espace d'air ;

formation d'un moule configuré selon une forme inversée d'au moins un réseau linéaire ; et

mise en contact de l'au moins un moule avec ladite structure formée à partir dudit substrat transmetteur de lumière, de manière à former :

(i) au moins deux éléments optiques entrée centraux étant des réseaux linéaires, situés dans ladite section de sommet et **caractérisés par** des structures linéaires périodiques présentant des périodes similaires et des orientations différentes,

(ii) un élément optique sortie de droite étant un réseau linéaire situé dans ladite section de droite, et

(iii) un élément optique sortie de gauche étant un réseau linéaire situé dans ladite section de gauche.

8. Méthode selon la revendication 7, comprenant en outre la fixation d'un élément optique supplémentaire sur ledit substrat transmetteur de lumière dans ladite section de sommet, ledit élément optique supplémentaire étant configuré pour réduire les diaphonies optiques entre lesdits au moins deux réseaux linéaires centraux.

9. Méthode selon la revendication 5 ou 7, dans laquelle lesdits au moins deux réseaux linéaires centraux sont conçus et construits comme des éléments optiques entrée, capables de rediriger les rayons lumineux atteignant ledit substrat transmetteur de lumière à l'intérieur dudit substrat transmetteur de lumière, de telle manière qu'au moins un rayon lumineux par mi lesdits rayons lumineux se propage à l'intérieur dudit substrat transmetteur de lumière par le biais d'une réflexion interne totale.

10. Dispositif, système ou méthode selon l'une des revendications 4, 6 ou 8, dans lequel ledit élément optique supplémentaire comprend un diffuseur de lumière.

11. Dispositif ou système selon la revendication 3, dans lequel lesdits au moins deux réseaux linéaires entrée comprennent un réseau linéaire entrée de droite et un réseau linéaire entrée de gauche, et dans lequel ledit réseau linéaire entrée de droite et ledit réseau linéaire entrée de gauche sont **caractérisés par** des structures linéaires périodiques présentant des périodes similaires et des orientations différentes.

12. Dispositif, système ou méthode selon l'une des revendications 3, 5 ou 7, dans lequel lesdits au moins deux réseaux linéaires entrée comprennent un réseau linéaire entrée de droite et un réseau linéaire entrée de gauche, et dans lequel ledit réseau linéaire entrée de droite et ledit réseau linéaire entrée de gauche sont **caractérisés par** des structures linéaires périodiques présentant des périodes similaires et des orientations similaires.

13. Dispositif ou système selon l'une des revendications 1 ou 2, dans lequel ledit élément optique sortie de gauche est conçu et construit pour rediriger la lumière atteignant ledit substrat transmetteur de lumière, selon n'importe quel angle compris dans un premier champ de vision partiel, hors dudit substrat transmetteur de lumière ; et ledit élément optique sortie de droite est conçu et construit pour rediriger la lumière atteignant ledit substrat transmetteur de lumière, selon n'importe quel angle compris dans un deuxième champ de vision partiel, hors dudit substrat transmetteur de lumière.

14. Dispositif, système ou méthode selon la revendication 13, dans lequel ledit élément optique sortie de gauche est **caractérisé par** des dimensions planaires, choisies de façon à ce qu'au moins une portion d'au moins un rayon lumineux le plus externe dans ledit premier champ de vision partiel soit dirigée vers une première région bidimensionnelle, et dans lequel ledit élément optique sortie de droite est **caractérisé par** des dimensions planaires, choisies de façon à ce qu'au moins une portion d'au moins un rayon lumineux le plus externe dans ledit deuxième champ de vision partiel soit dirigée vers une deuxième région bidimensionnelle, lesdites première et deuxième régions bidimensionnelles se trouvant à une distance prédéfinie du substrat transmetteur de lumière.

15. Dispositif, système ou méthode selon la revendication 14, dans lequel une largeur le long d'un axe vertical caractérisant les dimensions planaires desdits éléments optiques sortie de droite et de gauche est inférieure à une largeur le long dudit axe vertical caractérisant les dimensions planaires dudit élément optique entrée.

Fig. 1

Fig. 2A

Fig. 2B

Fig. 2C

Fig. 2D

Fig. 3A

Fig. 3B

Fig. 4A

Fig. 4B

Fig. 4C

Fig. 4D

Fig. 4E

Fig. 5

Fig. 6A

$54'\ (\alpha_D{}^{++})$   $52'\ (\alpha_D{}^{-+})$   $51''''\ (\alpha_D<\alpha_c)$   148

150

$53''\ (\alpha_D{}^{+-})$

$51''\ (\alpha_D{}^{--})$

14

145

13a

45

$51\ (\alpha_I{}^{--})$   $53\ (\alpha_I{}^{+-})$

$52\ (\alpha_I{}^{-+})$   $54\ (\alpha_I{}^{++})$

A  B  C  D

34

Fig. 6B

148

$53'\ (\alpha_D{}^{+-})$   $51'\ (\alpha_D{}^{--})$

150

$54''\ (\alpha_D{}^{++})$

$54'(\alpha_D>>\alpha_c)$   13a   $52''\ (\alpha_D{}^{-+})$

14

145

45

$51\ (\alpha_I{}^{--})$   $53\ (\alpha_I{}^{+-})$

$52\ (\alpha_I{}^{-+})$   $54\ (\alpha_I{}^{++})$

A  B  C  D

34

148

150

$54'''(\alpha_D < \alpha_c)$

$53' (\alpha_D^{+-})$   $51' (\alpha_D^{--})$

$52'' (\alpha_D^{-+})$

z

$54'' (\alpha_D^{++})$

14

$\eta_2$

146

13b

Fig. 6C

45

$51 (\alpha_I^{--})$

$52 (\alpha_I^{-+})$

$53 (\alpha_I^{+-})$

$54 (\alpha_I^{++})$

A  B  C  D

34

148

150

$54' (\alpha_D^{++})$   $52' (\alpha_D^{-+})$

$51'' (\alpha_D^{--})$

z

$53'' (\alpha_D^{+-})$

14

$\eta_2$

$51'(\alpha_D \gg \alpha_c)$   146

13b

Fig. 6D

45

$51 (\alpha_I^{--})$

$52 (\alpha_I^{-+})$

$53 (\alpha_I^{+-})$

$54 (\alpha_I^{++})$

A  B  C  D

34

Fig. 6E

Fig. 6F

Fig. 7

```
        ╭─────────────╮
        │     350     │
        │    begin    │
        ╰──────┬──────╯
        ┌──────┴──────┐
        │     360     │
        │  form a mold│
        └──────┬──────┘
   ┌───────────┴───────────────────────────┐
   │                385                     │
   │ contact the mold with a light transmissive material │
   └───────────┬───────────────────────────┘
     ┌─────────┴──────────────────────┐
     │             390                 │
     │ disengage the material form the mold │
     └─────────┬──────────────────────┘
        ╭───────┴─────╮
        │     400     │
        │     end     │
        ╰─────────────╯
```

# Fig. 8A

Fig. 8B

Fig. 8C

```
        ┌─────────────────┐
        │      373        │
        │     begin       │
        └─────────────────┘
                 │
        ┌─────────────────────────────┐
        │           374               │
        │  provide the second substrate│
        └─────────────────────────────┘
                 │
        ┌─────────────────────────────┐
        │           375               │
        │   apply a photoresist layer │
        └─────────────────────────────┘
                 │
        ┌─────────────────────────────────┐
        │             376                 │
        │ record a pattern on the photoresist│
        └─────────────────────────────────┘
                 │
        ┌─────────────────────────────┐
        │           377               │
        │    develop the photoresist  │
        └─────────────────────────────┘
                 │
        ┌─────────────────────────────┐
        │           378               │
        │   etch the second substrate │
        └─────────────────────────────┘
                 │
        ┌─────────────────────────────┐
        │           379               │
        │    remove the photoresist   │
        └─────────────────────────────┘
                 │
        ┌─────────────────┐
        │      380        │
        │      end        │
        └─────────────────┘
```

368

Fig. 8D

218                                                                          Fig. 9A

220
218                                                                          Fig. 9B

222                                 220
218                                                             Fig. 9C

224
218                                                             Fig. 9D

202                  224
218                                                             Fig. 9E

202
218                                                             Fig. 9F

Fig. 9G

Fig. 9H

Fig. 9I

Fig. 9J

Fig. 9K

Fig. 9L

200 — 203

201

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4711512 A, Upatnieks
- US 5966223 A, Friesem
- US 6757105 B, Niv
- US 896865 A
- US 11017920 A
- WO 2006008734 A
- US 6882479 B, Song
- WO 2004109349 A
- FR 2840692
- US 5969869 A
- US 6941069 B
- US 6687010 B
- US 6330388 B
- US 6766082 B
- US 6829095 B
- US 6171769 B
- US 6077656 B
- US 6197486 B
- US 6207361 B
- US 6436619 B
- US 6465140 B
- US 6566033 B
- US 5503875 A
- US 5441570 A
- US 6983620 B
- US 6787463 B
- US 6808978 B
- US 6869876 B
- US 7037574 B
- US 4441974 A
- US 4931158 A
- US 5693197 A
- US 6570172 B
- US 6492269 B
- US 6638409 B
- US 6855037 B
- US 6939206 B